# EUROPEAN PATENT APPLICATION

(11) **EP 4 799 454 A1**
(43) Date of publication of application: **02.09.2026**
(21) Application number: 26159359.4
(22) Date of filing: 18.02.2026
(51) Int. Cl.: A01B 69/00, A01B 69/04, B60P 1/40, B65G 67/04

(54) **AUTONOMOUS AGRICULTURAL SYSTEM INCLUDING A GUIDANCE SYSTEM FOR DETECTING A COMBINE HARVESTER AND CAUSING THE AUTONOMOUS AGRICULTURAL SYSTEM TO ALIGN WITH THE COMBINE HARVESTER IN INITIAL AND OPERATING ALIGNMENT POSITIONS, AND RELATED METHODS**

(30) Priority: 27.02.2025 US 202563764482 P
(71) Applicant: AGCO International GmbH, 8212 Neuhausen am Rheinfall (CH); PTx Trimble LLC, Westminster, CO 80021 (US)
(72) Inventor: CHRISTIANSEN, Martin Peter, 8930 Randers (DK); MUJKIC, Esma, 8930 Randers (DK); Steen, Kim Arild, 8930 Randers (DK); Beck, Nicolai, 8930 Randers (DK); Toustrup, Viktor Johns, 8930 Randers (DK); Murman, Josh, Rising City, 68658 (US)
(74) Representative: AGCO Intellectual Property Department

(57) **Abstract**

An autonomous agricultural system includes: an agricultural vehicle; a cart operably coupled to the agricultural vehicle; and a guidance system configured to: capture, via an array of sensors and in real-time, sensor data of a combine harvester; analyze the sensor data to detect a header of the combine harvester; determine an initial aligned position relative to the detected header of the combine harvester; responsive to determining the initial aligned position, cause the autonomous agricultural system to automatically align with the header of the combine harvester at the initial aligned position; subsequent to aligning with the header of the combine harvester, determine an operating aligned position relative to an unloading auger or a body of the combine harvester; and responsive to determining the operating aligned position, cause the autonomous agricultural system to automatically align with the unloading auger or the body of the combine harvester at the operating aligned position.

## Description

### CROSS-REFERENCE TO RELATED APPLICATIONS

### BACKGROUND

In the agricultural industry, aligning a tractor and cart with a combine harvester during grain unloading presents significant challenges. One major issue is the dust cloud generated by the combine, particularly when laying a swath or spreading material. This dust cloud can obscure sight of the combine harvester leading to inaccurate alignment and inefficient grain transfer. The reduced visibility caused by the dust cloud increases the risk of spillage and operational delays.

Another challenge is the growing demand for longer augers to accommodate wider headers. Longer augers are necessary to ensure uninterrupted grain transfer from the combine to the tractor. However, the extended length of these augers requires precise control and alignment to avoid mechanical stress and potential damage. This task becomes even more complex in uneven terrain, where the relative positioning of the tractor and combine can vary significantly.

Overall, the industry faces significant obstacles in achieving efficient and reliable grain unloading operations due to dust clouds, the need for longer augers, and the complexities of operating in uneven terrain.

### BRIEF SUMMARY

Some embodiments include an autonomous agricultural system comprising: an agricultural vehicle; a cart operably coupled to the agricultural vehicle; and a guidance system for monitoring and controlling operation of the cart and comprising: an array of sensors mounted on at least one the agricultural vehicle or the cart; at least one processor; and at least one non-transitory computer-readable storage medium storing instructions thereon that, when executed by the at least one processor, cause the guidance system to: capture, via the array of sensors and in real-time, sensor data of a combine harvester; analyze the sensor data to detect a header of the combine harvester; determine an initial aligned position relative to the detected header of the combine harvester; responsive to determining the initial aligned position, cause the autonomous agricultural system to automatically align with the header of the combine harvester at the initial aligned position; subsequent to aligning with the header of the combine harvester, determine an operating aligned position relative to an unloading auger or a body of the combine harvester; and responsive to determining the operating aligned position, cause the autonomous agricultural system to automatically align with the unloading auger or the body of the combine harvester at the operating aligned position.

Causing the autonomous agricultural system to automatically align with the unloading auger or the body of the combine harvester at the operating aligned position may include causing the autonomous agricultural system to move from the initial aligned position to the operating aligned position by performing a first zig-zag maneuver.

Determining the operating aligned position relative to the unloading auger or the body of the combine harvester may include: responsive to at least partially aligning the autonomous agricultural system with the header of the combine harvester, capturing, via the array of sensors and in real-time, additional sensor data of the combine harvester; analyzing the additional sensor data to detect at least one of the unloading auger or the body of the combine harvester; and determining the operating aligned position based at least partially on the detected unloading auger or the detected body of the combine harvester.

Determining the operating aligned position relative to the unloading auger or the body of the combine harvester may include: responsive to at least partially aligning the autonomous agricultural system with the header of the combine harvester, based at least partially on a known position and a known orientation of at least one of the unloading auger or the body of the combine harvester relative to the header of the combine harvester, determining the operating aligned position.

The guidance system may further include instructions that, when executed by the at least one processor, cause the guidance system to: query a database of the guidance system to determine the position and the orientation of the at least one of the unloading auger or the body of the combine harvester relative to the header of the combine harvester.

The guidance system may further include instructions that, when executed by the at least one processor, cause the guidance system to: receive a communication from the combine harvester indicating the position and the orientation of the at least one of the unloading auger or the body of the combine harvester relative to the header of the combine harvester.

The guidance system may further include instructions that, when executed by the at least one processor, cause the guidance system to: responsive to receiving a harvested commodity from the combine harvester via the unloading auger of the combine harvester, cause the autonomous agricultural system to disengage from the operating aligned position and to travel toward an unloading area of an agricultural field.

Causing the autonomous agricultural system to disengage from the operating aligned position and to travel toward the unloading area of the agricultural field may include: causing the autonomous agricultural system to perform a second zig-zag maneuver to realign with header of the combine harvester at the initial aligned position; and subsequent to aligning with the header of the combine harvester, causing the autonomous agricultural system to disengage from the initial aligned position and to travel toward the unloading area of the agricultural vehicle.

Capturing via the array of sensors and in real-time, sensor data of the combine harvester may be triggered responsive to the autonomous agricultural system leaving an unloading area or entering a harvesting area of an agricultural field.

The array of sensors may include at least one of a light detection and ranging (LIDAR) camera, an RGB camera, a stereo camera, a polarized camera, a thermal camera, an ultrasonic sensor, or a radio detection and ranging (RADAR) device.

The guidance system may further include a GNSS receiver.

The guidance system may further include instructions that, when executed by the at least one processor, cause the guidance system to: determine GNSS data related to at least one of the agricultural vehicle, the cart, or the combine harvester.

The guidance system further may further include instructions that, when executed by the at least one processor, cause the guidance system to: determine at least one of the initial aligned position or the operating aligned position based at least partially on the determined GNSS data.

Analyzing the sensor data to detect the header of the combine harvester may include utilizing a single shot detector algorithm to identify the header of the combine harvester.

Determining the operating aligned position may include determining an alignment distance at which the operating aligned position is located from the body of the combine harvester.

The operating aligned position may include a position and an orientation of the autonomous agricultural system relative to a determined position and a determined orientation of one of the unloading auger or the body of the combine harvester that aligns the cart of the autonomous agricultural system for receiving a commodity into a hopper of the cart from the unloading auger of the combine harvester.

When the cart is positioned and oriented in the operating aligned position, a downspout of the unloading auger of the combine may be oriented above the hopper of the cart and at least substantially horizontally centered between lateral sidewalls of the hopper of the cart.

The guidance system may further include instructions that, when executed by the at least one processor, cause the guidance system to: analyze the sensor data to determine at least one characteristic of the combine harvester; and based at least partially on the determined at least one characteristic of the combine harvester, determine at least one of the initial aligned position or the operating aligned position of the autonomous agricultural system relative to the combine harvester.

Some embodiments include a method of monitoring and controlling operation of a cart of an autonomous agricultural system, the cart being operably coupled to an agricultural vehicle of the autonomous agricultural system, the method comprising: capture, via an array of sensors and in real-time, sensor data of a combine harvester; analyzing the sensor data to detect a header of the combine harvester; determining an initial aligned position relative to the detected header of the combine harvester; responsive to determining the initial aligned position, causing the autonomous agricultural system to automatically align with the header of the combine harvester at the initial aligned position; subsequent to aligning with the header of the combine harvester, determining an operating aligned position relative to an unloading auger or a body of the combine harvester; and responsive to determining the operating aligned position, causing the autonomous agricultural system to automatically align with the unloading auger or the body of the combine harvester at the operating aligned position.

Causing the autonomous agricultural system to automatically align with the header of the combine harvester at the initial aligned position may include: determining a path between a current position and a current orientation of the autonomous agricultural system and the initial aligned position relative to the header of the combine harvester; and causing the autonomous agricultural system to travel along the determined path to move the autonomous agricultural system to the initial aligned position.

Capturing via the array of sensors and in real-time, sensor data of the combine harvester may be triggered responsive to the autonomous agricultural system leaving an unloading area or entering a harvesting area of an agricultural field.

Causing the autonomous agricultural system to automatically align with the unloading auger or the body of the combine harvester at the operating aligned position may include causing the autonomous agricultural system to move from the initial aligned position to the operating aligned position by performing a first zig-zag maneuver.

One or more embodiments include a guidance system for monitoring and controlling operation of a cart of an autonomous agricultural system, the cart being operably coupled to an agricultural vehicle of the autonomous agricultural system; the guidance system may include: an array of sensors mounted on at least one the agricultural vehicle or the cart; at least one processor; and at least one non-transitory computer-readable storage medium storing instructions thereon that, when executed by the at least one processor, cause the guidance system to: capture, via the array of sensors and in real-time, sensor data of a combine harvester; analyze the sensor data to detect a header of the combine harvester; determine an initial aligned position relative to the detected header of the combine harvester; responsive to determining the initial aligned position, cause the autonomous agricultural system to automatically align with the header of the combine harvester at the initial aligned position; subsequent to aligning with the header of the combine harvester, determine an operating aligned position relative to an unloading auger or a body of the combine harvester; and responsive to determining the operating aligned position, cause the autonomous agricultural system to automatically align with the unloading auger or the body of the combine harvester at the operating aligned position.

Some embodiments include an autonomous agricultural system including: an agricultural vehicle; a cart operably coupled to the agricultural vehicle; and a guidance system for monitoring and controlling operation of the cart and comprising: at least one SWIR camera mounted on the agricultural vehicle; at least one processor; and at least one non-transitory computer-readable storage medium storing instructions thereon that, when executed by the at least one processor, cause the guidance system to: capture, via the SWIR camera and in real-time, sensor data of a combine harvester; analyze the sensor data to detect the combine harvester; determine an operating aligned position relative to the combine harvester; and responsive to determining the operating aligned position, cause the autonomous agricultural system to automatically align with the combine harvester at the operating aligned position.

Determining the operating aligned position to the at least a portion of the combine harvester may include: based at least partially on the analysis of the sensor data, determining an initial aligned position relative to a detected header of the combine harvester; responsive to determining the initial aligned position, causing the autonomous agricultural system to automatically align with the header of the combine harvester at the initial aligned position; and subsequent to aligning with the header of the combine harvester, determining the operating aligned position relative to an unloading auger or a body of the combine harvester.

Causing the autonomous agricultural system to automatically align with the combine harvester at the operating aligned position may include causing the autonomous agricultural system to automatically align with the unloading auger or the body of the combine harvester at the operating aligned position.

Causing the autonomous agricultural system to automatically align with the unloading auger or the body of the combine harvester at the operating aligned position may include causing the autonomous agricultural system to move from the initial aligned position to the operating aligned position by performing a first zig-zag maneuver.

Determining the operating aligned position relative to the unloading auger or the body of the combine harvester may include: responsive to at least partially aligning the autonomous agricultural system with the header of the combine harvester, capturing additional sensor data of the combine harvester; analyzing the additional sensor data to detect at least one of the unloading auger or the body of the combine harvester; and determining the operating aligned position based at least partially on the detected unloading auger or the detected body of the combine harvester.

Determining the operating aligned position relative to the unloading auger or the body of the combine harvester may include responsive to at least partially aligning the autonomous agricultural system with the header of the combine harvester, based at least partially on a known position and a known orientation of at least one of the unloading auger or the body of the combine harvester relative to the header of the combine harvester, determining the operating aligned position.

The guidance system may further include instructions that, when executed by the at least one processor, cause the guidance system to: query a database of the guidance system to determine the position and the orientation of the at least one of the unloading auger or the body of the combine harvester relative to the header of the combine harvester.

The guidance system may further include instructions that, when executed by the at least one processor, cause the guidance system to: receive a communication from the combine harvester indicating the position and the orientation of the at least one of the unloading auger or the body of the combine harvester relative to the header of the combine harvester.

The guidance system may further include instructions that, when executed by the at least one processor, cause the guidance system to: responsive to receiving a harvested commodity from the combine harvester via the unloading auger of the combine harvester, cause the autonomous agricultural system to disengage from the operating aligned position and to travel toward an unloading area of an agricultural field.

Causing the autonomous agricultural system to disengage from the operating aligned position and to travel toward the unloading area of the agricultural field may include: causing the autonomous agricultural system to perform a second zig-zag maneuver to realign with header of the combine harvester at the initial aligned position; and subsequent to aligning with the header of the combine harvester, causing the autonomous agricultural system to disengage from the initial aligned position and to travel toward the unloading area of the agricultural vehicle.

The guidance system may further include a GNSS receiver.

The guidance system may further include instructions that, when executed by the at least one processor, cause the guidance system to: determine GNSS data related to at least one of the agricultural vehicle, the cart, or the combine harvester.

The guidance system may further include instructions that, when executed by the at least one processor, cause the guidance system to: determine at least one of the initial aligned position or the operating aligned position based at least partially on the determined GNSS data.

The guidance system may further include instructions that, when executed by the at least one processor, cause the guidance system to: analyze the sensor data to determine at least one characteristic of the combine harvester; and based at least partially on the determined at least one characteristic of the combine harvester, determine at least one of the initial aligned position or the operating aligned position of the autonomous agricultural system relative to the combine harvester.

Capturing the sensor data via the SWIR camera and in real-time may be triggered responsive to the autonomous agricultural system leaving an unloading area or entering a harvesting area of an agricultural field.

The autonomous agricultural system may further include an array of sensors and instructions that, when executed by the at least one processor, cause the guidance system to: capture additional sensor data of the combine harvester via the array of sensors.

The array of sensors may include at least one of a light detection and ranging (LIDAR) camera, an RGB camera, a stereo camera, a polarized camera, a thermal camera, an ultrasonic sensor, or a radio detection and ranging (RADAR) device.

Analyzing the sensor data to detect the combine harvester may include utilizing a single shot detector algorithm to identify the combine harvester.

Determining the operating aligned position may include determining an alignment distance at which the operating aligned position is located from the body of the combine harvester.

The operating aligned position may include a position and an orientation of the autonomous agricultural system relative to a determined position and a determined orientation of one of an unloading auger or a body of the combine harvester that aligns the cart of the autonomous agricultural system for receiving a commodity into a hopper of the cart from the unloading auger of the combine harvester.

When the cart is positioned and oriented in the operating aligned position, a downspout of the unloading auger of the combine may be oriented above the hopper of the cart and at least substantially horizontally centered between lateral sidewalls of the hopper of the cart.

One or more embodiments include a method of monitoring and controlling operation of a cart of an autonomous agricultural system, the cart being operably coupled to an agricultural vehicle of the autonomous agricultural system; the method may include: capturing, via a SWIR camera and in real-time, sensor data of a combine harvester; analyzing the sensor data to detect the combine harvester; determining an operating aligned position relative to the combine harvester; and responsive to determining the operating aligned position, causing the autonomous agricultural system to automatically align with the combine harvester at the operating aligned position.

The method may further include: based at least partially on the analysis of the sensor data, determining an initial aligned position relative to a detected header of the combine harvester; responsive to determining the initial aligned position, causing the autonomous agricultural system to automatically align with the header of the combine harvester at the initial aligned position; and subsequent to aligning with the header of the combine harvester, determining the operating aligned position relative to an unloading auger or a body of the combine harvester.

Causing the autonomous agricultural system to automatically align with the combine harvester at the operating aligned position may include causing the autonomous agricultural system to automatically align with the unloading auger or the body of the combine harvester at the operating aligned position.

Causing the autonomous agricultural system to automatically align with the header of the combine harvester at the initial aligned position may include: determining a path between a current position and a current orientation of the autonomous agricultural system and the initial aligned position relative to the header of the combine harvester; and causing the autonomous agricultural system to travel along the determined path to move the autonomous agricultural system to the initial aligned position.

Causing the autonomous agricultural system to automatically align with the unloading auger or the body of the combine harvester at the operating aligned position may include causing the autonomous agricultural system to move from the initial aligned position to the operating aligned position by performing a zig-zag maneuver.

Capturing via the SWIR camera and in real-time, sensor data of the combine harvester may be triggered responsive to the autonomous agricultural system leaving an unloading area or entering a harvesting area of an agricultural field.

Some embodiments include a guidance system for monitoring and controlling operation of a cart of an autonomous agricultural system, the cart being operably coupled to an agricultural vehicle of the autonomous agricultural system; he guidance system may include: an array of sensors mounted on at least one the agricultural vehicle or the cart; at least one processor; and at least one non-transitory computer-readable storage medium storing instructions thereon that, when executed by the at least one processor, cause the guidance system to: capture, via the SWIR camera and in real-time, sensor data of a combine harvester; analyze the sensor data to detect the combine harvester; determine an operating aligned position relative to the combine harvester; and responsive to determining the operating aligned position, cause the autonomous agricultural system to automatically align with the combine harvester at the operating aligned position.

Other technical features may be readily apparent to one skilled in the art from the following figures, descriptions, and claims.

Within the scope of this application, it should be understood that the various aspects, embodiments, examples, and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

While the specification concludes with claims particularly pointing out and distinctly claiming what are regarded as embodiments of the present disclosure, various features and advantages may be more readily ascertained from the following description of example embodiments when read in conjunction with the accompanying drawings, in which:
FIG. 1 shows a schematic top view of an autonomous agricultural system and a plurality of transport vehicles according to one or more embodiments of the disclosure;
FIG. 2 shows a perspective view of an autonomous agricultural system according to one or more embodiments of the disclosure;
FIG. 3 shows a top view of an autonomous agricultural system according to one or more embodiments of the disclosure;
FIG. 4 shows a top view of a transport vehicle according to one or more embodiments of the disclosure;
FIG. 5 shows a side view of a cart and an auger of an auger system of the cart according to one or more embodiments of the disclosure;
FIG. 6 shows a schematic view of a cart management system according to one or more embodiments of the present disclosure;
FIG. 7 shows a flowchart of a method of monitoring and controlling operation of an autonomous agricultural system according to one or more embodiments of the disclosure;
FIG. 8A shows a schematic, top view of an autonomous agricultural system in an initial aligned position relative to a combine harvester according to one or more embodiments of the disclosure;
FIG. 8B shows a schematic, top view of an autonomous agricultural system in an example operating aligned position relative to a combine harvester according to one or more embodiments of the disclosure;
FIG. 9 shows a flowchart of a method of monitoring and controlling operation of an autonomous agricultural system according to one or more embodiments of the disclosure; and
FIG. 10 is a schematic view of a central controller according to embodiments of the disclosure.

### DETAILED DESCRIPTION

Illustrations presented herein are not meant to be actual views of any particular agricultural vehicle, grain cart, sensors, guidance system, component, or system, but are merely idealized representations that are employed to describe embodiments of the disclosure. Additionally, elements common between figures may retain the same numerical designation for convenience and clarity.

The following description provides specific details of embodiments. However, a person of ordinary skill in the art will understand that the embodiments of the disclosure may be practiced without employing many such specific details. Indeed, the embodiments of the disclosure may be practiced in conjunction with conventional techniques employed in the industry. In addition, the description provided below does not include all the elements that form a complete structure or assembly. Only those process acts and structures necessary to understand the embodiments of the disclosure are described in detail below. Additional conventional acts and structures may be used. The drawings accompanying the application are for illustrative purposes only and are thus not drawn to scale.

As used herein, the terms "comprising," "including," "containing," "characterized by," and grammatical equivalents thereof are inclusive or open-ended terms that do not exclude additional, unrecited elements or method steps, but also include the more restrictive terms "consisting of" and "consisting essentially of" and grammatical equivalents thereof.

As used herein, the singular forms following "a," "an," and "the" are intended to include the plural forms as well, unless the context clearly indicates otherwise.

As used herein, the term "may" with respect to a material, structure, feature, or method act indicates that such is contemplated for use in implementation of an embodiment of the disclosure, and such term is used in preference to the more restrictive term "is" so as to avoid any implication that other compatible materials, structures, features, and methods usable in combination therewith should or must be excluded.

As used herein, the term "configured" refers to a size, shape, material composition, and arrangement of one or more of at least one structure and at least one apparatus facilitating operation of one or more of the structure and the apparatus in a predetermined way.

As used herein, any relational term, such as "first," "second," "top," "bottom," "upper," "lower," "above," "beneath," "side," "outer," "inner," "front," "rear," "lateral," etc., is used for clarity and convenience in understanding the disclosure and accompanying drawings, and does not connote or depend on any specific preference or order, except where the context clearly indicates otherwise. For example, these terms may refer to an orientation of elements of an agricultural vehicle, a combine harvester, a cart, a transport vehicle, and/or an autonomous agricultural system as illustrated in the drawings. Additionally, these terms may refer to an orientation of elements of an agricultural vehicle, a combine harvester, a cart, and/or a transport vehicle when utilized in a conventional manners.

As used herein, the term "proximate," when utilized to describe positions of agricultural vehicle and/or the cart to another object (e.g., transport vehicle) means that the agricultural vehicle and/or the cart and the other object are within a given distance from each other. The distance may be at least partially dependent on a size (e.g., a lateral width in a horizontal direction orthogonal to a path of travel) of the agricultural vehicle and/or the cart. For example, the agricultural vehicle or the cart may be proximate the other object when the agricultural vehicle is within 20m, 10m, 5m, 2m, or 1m of the other object. In some embodiments, the distance may be a percentage (e.g., 25%) of the overall lateral width of the agricultural vehicle and/or cart. Additionally, in one or more embodiments, the distance may be based on an unloading system of the cart. For instance, the distance may include an appropriate distance between the cart and a transport vehicle for unloading process (e.g., unloading grain from the cart to the transport vehicle).

As used herein, the term "substantially" in reference to a given parameter, property, or condition means and includes to a degree that one skilled in the art would understand that the given parameter, property, or condition is met with a small degree of variance, such as within acceptable manufacturing tolerances. By way of example, depending on the particular parameter, property, or condition that is substantially met, the parameter, property, or condition may be at least 90.0% met, at least 95.0% met, at least 99.0% met, or even at least 99.9% met.

As used herein, the term "about" used in reference to a given parameter is inclusive of the stated value and has the meaning dictated by the context (e.g., it includes the degree of error associated with measurement of the given parameter, as well as variations resulting from manufacturing tolerances, etc.).

As used herein, the term "and/or" includes any and all combinations of one or more of the associated listed items.

As used herein, the term "representation" may refer to a digital encoding of a physical object or phenomenon as captured by one or more sensors. The digital encoding may take various forms depending on the type of sensor data. As non-limiting examples 1) in image data, a representation may include pixels that represent visual characteristics of the object, 2) in video data, in addition to the representations of image data, a representation may include a sequence of images (frames) that capture the object's appearance and movement over time, 3) in light detection and ranging (LIDAR) data, a representation may include a three-dimensional (3D) point cloud where each point represents a precise location on the object's surface, 4) in radio detection and ranging (RADAR) data, a representation may include a two-dimensional (2D) map or 3D map showing the object's location and movement based on radio wave reflections, 5) in thermal data, as representation may include a thermal image where different colors represent the object's temperature variations, and 6) in sound data, a representation may include a digital signal representing sound waves produced by or reflected from the object. Put another way, a representation, as used herein, includes a structured form of data that allows for the analysis, interpretation, and understanding of the physical object or phenomenon captured by the sensors.

As used herein, the term "real-time" may refer to immediate or near-instantaneous collection (e.g., capturing) and processing of data (e.g., sensor data) as events occur. As a result, sensor data is captured and made available for analysis or decision-making without significant delay, allowing for timely responses and actions based on most current information.

As used herein the term "position" may refer to specific location of an object in a given space, typically defined by coordinates (e.g., x, y, z) in a coordinate system. For example, a position of a cart in a field might be given by its latitude, longitude, and altitude.

As used herein the term "orientation" may refer to an object's alignment relative to a reference frame. For example, the term "orientation" refers to how an object is aligned and rotated in space. For example, the term "orientation" refers to rotational coordinates (e.g., pitch, roll, yaw).

As used herein, the terms "Global Navigation Satellite System data" or "GNSS data" refer to data including a geographical location and a velocity of an object (e.g., agricultural vehicle) at a given time. The GNSS data may be determined by processing signals received from multiple satellites within global navigation satellite constellations such as Global Positioning System (GPS), GLONASS, Galileo, and BeiDou. In particular, a GNSS receiver may continuously acquire and track satellite signals, calculate time delays between a signal transmission and reception to compute pseudoranges, and use these pseudoranges to determine a position of the GNSS receiver through trilateration.

As used herein, the terms "Inertial Measurement Unit data" or "IMU data" refer to data including one or more of a specific force, an attitude, a velocity, an acceleration, an angular velocity, and/or an orientation of a moving object (e.g., an agricultural vehicle) at a given time.

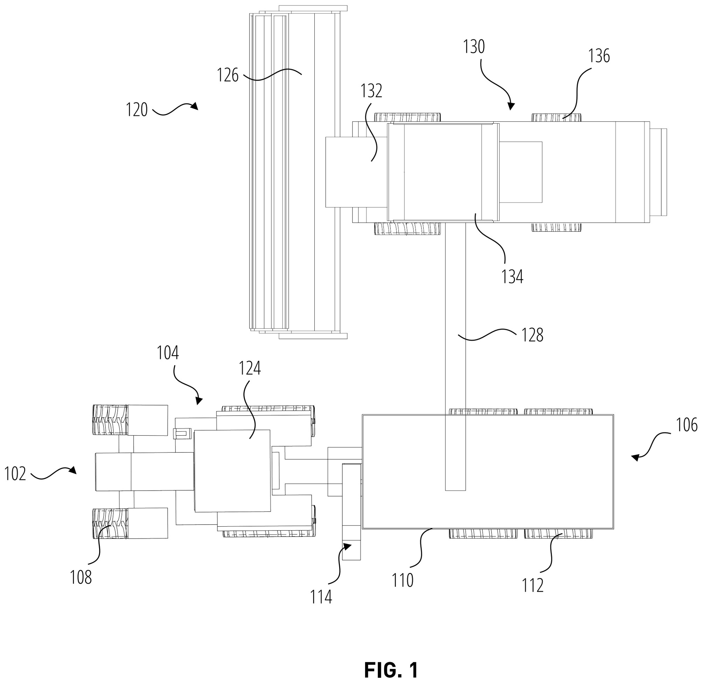

FIG. 1 is a simplified top view of an autonomous agricultural system 102 and a combine harvester 120 according to one or more embodiments of the disclosure. FIG. 1 shows the autonomous agricultural system 102 in an aligned position relative to the combine harvester 120. For examples, as is discussed in greater detail below, during a harvesting operation, the autonomous agricultural system 102 may be in an aligned position relative to the combine harvester 120 for periods of time to enable the combine harvester 120 to unload a harvested commodity (e.g., crop) into a cart of the autonomous agricultural system 102.

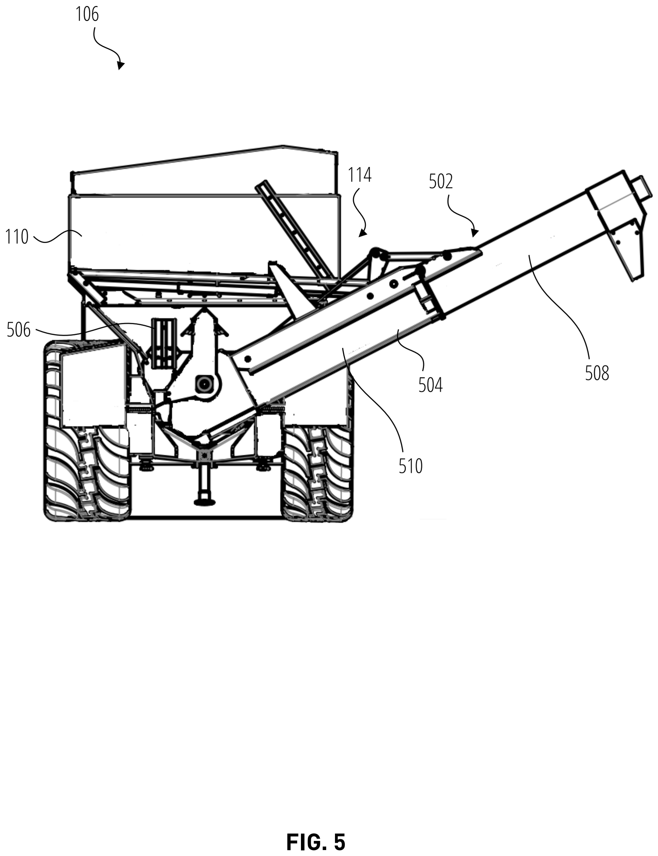

The autonomous agricultural system 102 may include an agricultural vehicle 104 (e.g., a tractor) and a cart 106 (e.g., commodity trailer). The cart 106 may be coupled to a hitch of the agricultural vehicle 202 via one or more hitch attachments. The agricultural vehicle 202 may be supported by wheels 108 and/or tracks. The cart 106 may include a hopper 110 supported by wheels 112. The hopper 110 may define a container (e.g., bin) for receiving a commodity (e.g., grain) from a harvester vehicle (e.g., a combine harvester) and may include a tapered shape that facilitates a flow of the commodity towards an unloading system 114 of the cart 106. The unloading system 114 may be utilized to unload the commodity from the hopper 110 and into one or more of the plurality of transport vehicles. The unloading system 114 may include an auger system including an auger and a hydraulic motor. The unloading system 114 is described in greater detail below in regard to FIG. 5.

The combine harvester 120 may include a header 126, a body 130 supported by wheels and including a cabin 132 and commodity tank 134, and an unloading auger 128. The combine harvester 120 may further include a feeder house, a threshing drum, a separating system, and a cleaning system.

The header 126 may be mounted on a front of the combine harvester 120 relative to a direction of travel during an agricultural process (e.g., harvesting operation) and may be configured cut and gather a crop. The header 126 a cutter bar, a reel, and an auger. The cutter bar may be configured to slice through crop stems, while the reel guides cut crop material towards the auger, which then transports the cut crop material to the feeder house. The feeder house may act as a conveyor, moving the cut crop material from the header 126 to the threshing drum. The feeder house may enable a relatively steady and controlled flow of cut crop material into a threshing system of the combine harvester 120.

The threshing drum may include a cylindrical component equipped with rasp bars or spikes that rotate to separate a commodity (e.g., grain) from stalks and chaff. As the cut crop material passes through the threshing drum, the commodity (e.g., grain) may be loosened from a remainder of the cut crop material (e.g, the stalks and chaff). The separated commodity is then moved to a separating system, which may include straw walkers or rotary separators. The separating system further separates the commodity from the remaining stalks and chaff, enabling the commodity to fall through to the cleaning system.

The cleaning system may include a series of sieves and fans that remove any remaining impurities from the commodity (e.g., grain). The sieves filter out larger debris, while the fans blow away lighter chaff and dust. The cleaned commodity (e.g., grain) is then transported to the commodity tank 134, which includes a storage bin located on the combine harvester 120. The commodity tank 134 temporarily holds the harvested commodity (e.g., grain) until it is unloaded to the cart 106 of the autonomous agricultural system 102.

The unloading auger 128 may include an elongated, rotating screw assembly that transfers the commodity (e.g., grain) from the commodity tank 134 to the hopper 110 of the cart 106 of the autonomous agricultural system 102. The unloading auger 128 may be extendable and orientable to facilitate efficient unloading of the commodity (e.g., grain). The combine harvester 120 and the autonomous agricultural system 102 are described in greater detail below.

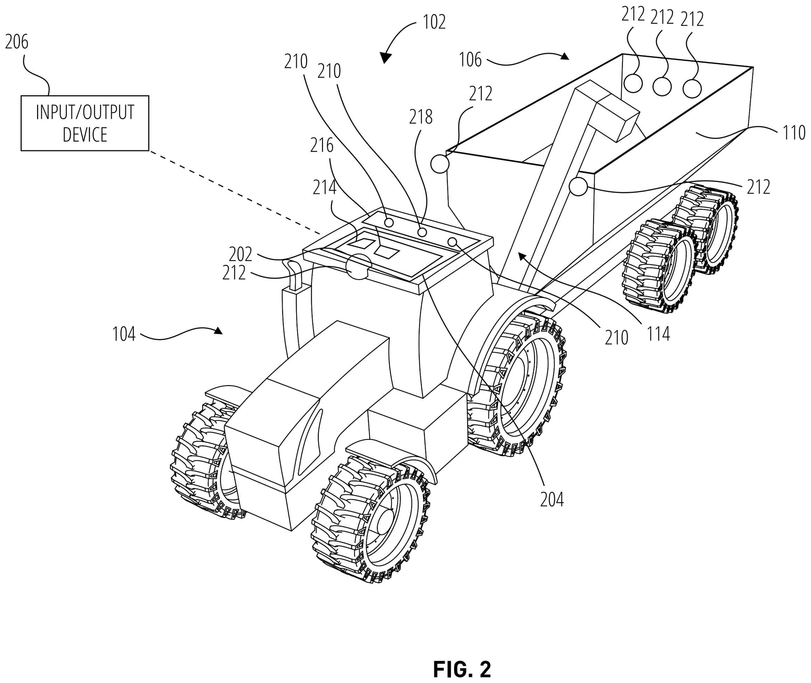

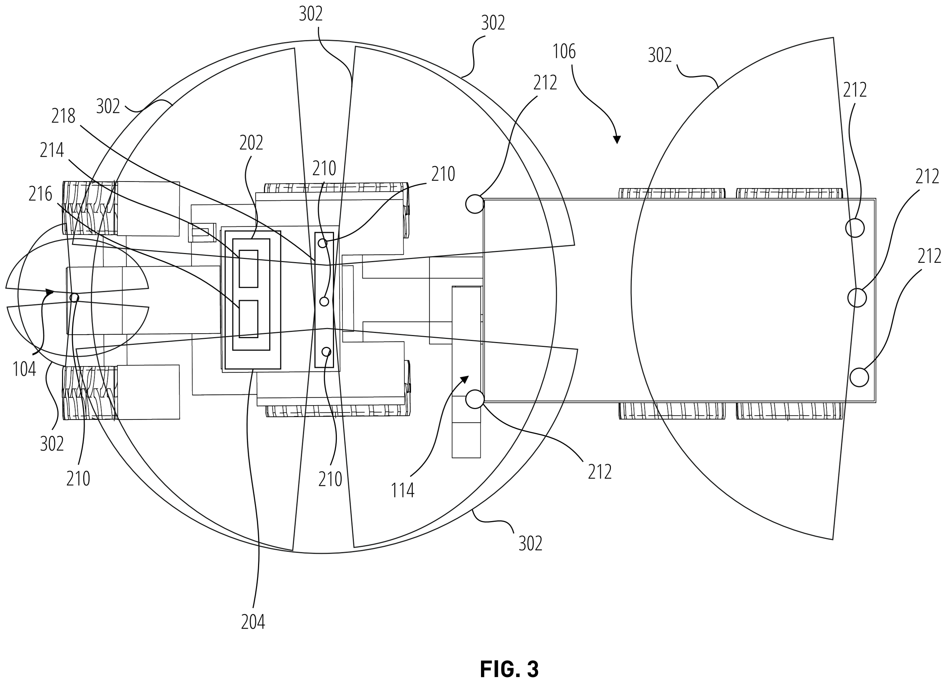

FIG. 2 is a simplified perspective view of the autonomous agricultural system 102 of FIG. 1 according to one or more embodiments of the disclosure. FIG. 3 is a simplified top view of the autonomous agricultural system 102 of FIG. 2. Referring to FIG. 2 and FIG. 3 together, as noted above, the autonomous agricultural system 102 may include the agricultural vehicle 104 and the cart 106, and the cart 106 may include the hopper 110 and the unloading system 114. In some embodiments, the agricultural vehicle 104 may include a tractor.

The agricultural vehicle 104 may further include a control system 204. The control system 204 may be configured to control one or more operations and devices of the agricultural vehicle 104 and/or the cart 106. In some embodiments, one or more parts of the control system 204 may be located in, for example, a cabin of the agricultural vehicle 104. In other embodiments, one or more parts of the control system 204 may be located on a roof of the cabin of the agricultural vehicle 104, in or proximate an engine compartment of the agricultural vehicle 104, or any other suitable portion of the agricultural vehicle 104. In one or more embodiments, one or more parts of the control system 204 may be located on or within the agricultural vehicle 104 and one or more other parts of the control system 204 may be located on or within the cart 106. In some embodiments, one or more parts of the control system 204 may be remote to the agricultural vehicle 104 and/or the cart 106.

The control system 204 may include a guidance system 202 for monitoring operations of the cart 106 and for guiding and controlling operations of the autonomous agricultural system 102 during an agricultural process. For example, based on input data (e.g., sensed data, received data, determined data), the guidance system 202 may guide and control operations of the autonomous agricultural system 102 to align the autonomous agricultural system 102 with the combine harvester 120 and/or transport vehicles.

The guidance system 202 may include at least one input/output device 206 (e.g., a display) and a perception system 208. The perception system 208 may be mounted on one or more of the agricultural vehicle 104 or the cart 106 of the autonomous agricultural system 102. Furthermore, the perception system 208 may include one or more sensors 210 (e.g., an array of sensors). The one or more sensors 210 may be at least partially operated by the guidance system 202. In some embodiments, the perception system 208 and the associated one or more sensors 210 are mounted on one or more of the agricultural vehicle 104 and the cart 106.

In some embodiments, the sensors 210 may include one or more of a light detection and ranging (LIDAR) camera, an RGB (red, green, and blue) camera, a stereo camera, ultrasonic sensors, or a radio detection and ranging (RADAR) device. In further embodiments, one or more of the sensors 210 may include a thermal camera. For example, one or more of the sensors 210 may include a long-wave infrared (LWIR) camera. In additional embodiments, one or more of the sensors 210 may include one or more of a mid-wave infrared (MWIR) camera, a short-wave infrared (SWIR) camera, a near infrared (NIR) camera, an ultraviolet camera (UV camera), or a visible light camera with an infrared filter.

In one or more embodiments, one or more of the sensors 210 may include a polarized camera (e.g., a polarized NIR, RGB, or SWIR camera). In particular, one or more of the sensors 210 may include one or more polarization filters that separate incoming light into polarized components. Furthermore, the polarized camera may include micro-polarizers integrated directly on the image sensor portion of the polarized camera that filter the incoming light for each detected pixel based on the pixel's polarized state (e.g., 0°, 45°, 90°, 135°). In one or more embodiments, the polarized camera may be configured to capture multiple images simultaneously with each captured image correlated to a different polarization state. Moreover, one or more algorithms may be utilized to process the images captured at different polarizations and generate relatively detailed images that can highlight features not typically visible in standard intensity-based imaging.

In some embodiments, the one or more sensors 210 include a stereo camera system including at least a first stereo camera and a second stereo camera. The first stereo camera and the second stereo camera may be mounted to the cabin 124 of the agricultural vehicle 104. For example, the each of the first stereo camera and the second stereo camera may be mounted on or proximate opposing lateral sides of the cabin 124 of the agricultural vehicle 104. The foregoing placement of the first stereo camera and the second stereo camera may enable a relatively wide perspective to capture large areas. In additional embodiments, the first stereo camera and the second stereo camera may be mounted on the cabin at different elevations (e.g., in a parallel configuration) where the angular centers of the fields of view of the first stereo camera and the second stereo camera are parallel to each other. In further embodiments, the first stereo camera and the second stereo camera may be mounted on one or more of the hood of the agricultural vehicle 104 or side walls of the cart 106.

The first and second stereo cameras may be mounted a fixed distance from each other (e.g., apart). The fixed distance can be referred to as the baseline. In some embodiments, the first distance may be at least 0.5m. As a result, the first and second stereo cameras may be able to capture image data of a same scene from slightly different angles. Each of first and second stereo cameras may include any of the cameras described herein. For example, each of first and second stereo cameras may include one or more of a monochrome camera, RGB camera, infrared camera, high-resolution camera, global shutter camera, rolling shutter camera, or a time-of-flight (ToF) camera. Furthermore, in some embodiments, each of the first and second stereo cameras may, respectively, include a plurality of cameras.

As mentioned above, in some embodiments, the perception system 208 may include one or more sensors 210 including a short-wave infrared (SWIR) camera. In some embodiments, the SWIR camera may be attached (e.g., mounted) to a front of the agricultural vehicle 104 (e.g., tractor) (e.g., a front of the agricultural vehicle 104 relative to a direction of travel). Furthermore, the SWIR camera may include a gated SWIR camera. The gate SWIR camera may operate by emitting pulses of light (i.e., SWIR wavelengths of light) and selectively capturing (e.g., detecting) reflections based on a distance of a target (e.g., a combine harvester 120). By controlling the time intervals (e.g., gates) of light detection, the gated SWIR camera can effectively filter out environmental interference such as dust, fog, and/or smoke. Accordingly, the gated SWIR camera enables capturing (e.g., detecting) only reflections within a specific distance range from the gated SWIR camera. Capturing (e.g., detecting) only reflections within a specific distance range from the gated SWIR camera enables capturing a relatively clear visualization of objects through obscurants. In some embodiments, the gated SWIR camera may emit light within a spectrum of about 1.0 micrometers to about 2.5 micrometers, where particles such as dust are relatively transparent. As a result, the SWIR camera may enable detecting objects (e.g., a combine harvester 120) in harvesting environments where dust clouds are often present. Additionally, the gated SWIR camera may maintain visibility and provide critical navigation information to the guidance system 202.

In some embodiments, the gated SWIR camera may include an indium gallium arsenide (InGaAs)-based SWIR sensors. In additional embodiments, the gated SWIR camera may include a complementary metal-oxide-semiconductor (CMOS)-based SWIR sensor. The CMOS-based SWIR sensor may provide for a relatively smaller form factor, lower power consumption, and enhanced integration capabilities in comparison to other options. Additionally, the CMOS-based SWIR sensor may provide relatively higher image quality in low-light and adverse weather conditions in comparison to conventional cameras. Furthermore, because the CMOS-based SWIR sensor can be gated, the CMOS-based SWIR sensor may capture relatively clearer images by filtering out unwanted light reflections, thus improving the accuracy and reliability of the captured sensor data.

As noted above, in some embodiments, the sensors 210 may include a radio detection and ranging (RADAR) device. Furthermore, the RADAR device may include a synthetic aperture radar (SAR), or an inverse synthetic aperture radar (ISAR) configured to facilitate receiving relatively higher resolution data compared to conventional radars. The RADAR device may be configured to scan the radar signal across a range of angles to capture a 2D representation of the environment, each pixel representing the radar reflectivity at a specific distance and angle. In other embodiments, the RADAR device includes a 3D radar configured to provide range (e.g., distance, depth), velocity (also referred to as "Doppler velocity"), azimuth angle, and elevational angle. The RADAR device may be configured to provide a 3D radar point cloud to the guidance system 202.

In some embodiments, the sensor data may include one or more of image data, video data, thermal data, light detection and ranging (LIDAR) data, RADAR data, perception data, 3D, and/or ultrasonic data. The sensors 210 may be configured to capture sensor data including one or more of relatively high resolution color images/video, relatively high resolution infrared images/video, or light detection and ranging data. In some embodiments, the sensors 210 may be configured to capture sensor data at multiple focal lengths. In some embodiments, the sensors 210 may be configured to combine multiple exposures into a single high-resolution image/video. In some embodiments, each of the sensors 210 may include multiple image sensors (e.g., cameras) with fields of view facing different directions.

The RADAR data may include one or more of analog-to-digital (ADC) signals, a radar tensor (e.g., a range-azimuth-doppler tensor), and a radar point cloud. In some embodiments, the output radar data includes a point cloud, such as a 2D radar point cloud or a 3D radar point cloud (also, simply referred to herein as a "3D point cloud"). In some embodiments, the output RADAR data includes a 3D radar point cloud.

In some embodiments, the sensors 210 are placed and oriented such that fields of view 302 of the sensors 210 encompass the agricultural vehicle 104, the cart 106, equipment (e.g., unloading system 114) of the cart 106, environments surrounding the autonomous agricultural system 102, and objects within the environments surrounding the autonomous agricultural system 102 (e.g., the combine harvester 120). A field of view 302 may refer to an angular extent of an observable scene that a given sensor 210 can capture. For example, the fields of view 302 of the sensors 210 may at least substantially encompass entireties of the agricultural vehicle 104, the cart 106, and equipment (e.g., unloading system 114) of the cart 106. Furthermore, the fields of view 302 of the sensors 210 may provide at least substantially a 360° view of the environments surrounding the autonomous agricultural system 102. One or more of the sensors 210 may have a viewpoint (i.e., a position from which the field of view 302 is observed) originating from the agricultural vehicle 104. For example, in some embodiments, one or more of the sensors 210 may have a viewpoint (i.e., a position from which the field of view 302 is observed) originating from a front of the agricultural vehicle 104. Additionally, one or more sensors 210 may have a viewpoint (i.e., a position from which the field of view 302 is observed) originating from the cart 106 (e.g., from a distal end of the auger 504 of the cart 106).

Some of the sensors 210 may have a respective fields of view. As is described in further detail below, in some embodiments, the sensors 210 may be configured and/or controlled to capture sensor data related to the cart 106, the combine harvester 120, and, in some embodiments, the agricultural vehicle 104 while the agricultural vehicle 104 and/or the cart 106 are performing an agricultural process (e.g., aligning with the combine harvester 120, following the combine harvester 120, receiving a commodity, aligning within a transport vehicle, unloading a commodity). Specifically, the sensors 210 may be controlled to capture sensor data such as images, videos, 3D representations, and/or other representations of the cart 106, the combine harvester 120, the agricultural vehicle 104, and transport vehicles, and information (e.g., any of the foregoing data) related to the environments surrounding or around the cart 106 and the agricultural vehicle 104.

In some embodiments, one or more of the sensors 210 includes a field of view that faces an interior of the hopper 110 of the cart 106. In other words, one or more of the sensors 210 includes a field of view that views (e.g., encompasses) a commodity within the hopper 110 of the cart 106. In some embodiments, one or more of the sensors 210 includes a field of view that faces the unloading system 114 of the cart 106. In one or more embodiments, one or more of the sensors 210 includes a field of view that faces a lateral side or away from a lateral side of the cart 106. In one or more embodiments, one or more of the sensors 210 includes a field of view that faces hydraulic joints of the cart 106. In some embodiments, one or more of the sensors 210 includes a field of view that generally faces the cart 106 (e.g., faces rearward from the agricultural vehicle 104). In one or more embodiments, one or more of the sensors 210 includes a field of view that faces toward a direction of travel of the agricultural vehicle 104 (e.g., face outward from a front of the agricultural vehicle 104). In one or more embodiments, one or more of the sensors 210 includes a field of view that faces away from a direction of travel of the agricultural vehicle 104.

Additionally, the sensors 210 may be configured and controlled to capture various types of sensor data related to the cart 106, the combine harvester 120, the agricultural vehicle 104, transport vehicles, and/or environments surrounding the autonomous agricultural system 102. Specifically, the sensors 210 may be controlled to capture sensor data such as images of the cart 106, the combine harvester 120, the agricultural vehicle 104, transport vehicles, and/or environments surrounding the autonomous agricultural system 102, videos of the cart 106, the combine harvester 120, the agricultural vehicle 104, transport vehicles, and/or environments surrounding the autonomous agricultural system 102, 3D representations of the cart 106, the combine harvester 120, the agricultural vehicle 104, transport vehicles, and/or environments surrounding the autonomous agricultural system 102, other visual depictions of the cart 106, the combine harvester 120, the agricultural vehicle 104, transport vehicles, and/or environments surrounding the autonomous agricultural system 102, and/or other sensed information regarding the cart 106, the combine harvester 120, the agricultural vehicle 104, transport vehicles, and/or environments surrounding the autonomous agricultural system 102.

Furthermore, as is described in greater detail below, the guidance system 202 may utilize the sensor data captured by the sensors 210 of the perception system 208 to monitor and control operation of the autonomous agricultural system 102 (e.g., the cart 106 and/or the agricultural vehicle 104). In particular, the guidance system 202 may utilize the sensor data captured by the sensors 210 to align the autonomous agricultural system 102 relative to a combine harvester 120 or parts of the combine harvester 120 during a harvesting operation, guide the autonomous agricultural system 102 along a determined path of travel, align the autonomous agricultural system 102 relative to a transport vehicle, orient the cart 106 relative to the agricultural vehicle 104, and/or unload a commodity from the cart 106 to a selected transport vehicle.

In some embodiments, the guidance system 202 may include or be operably coupled to one or more additional sensors 212. The additional sensors 212 may include any of the sensors described in regard to the one or more sensor 210. Furthermore, the additional sensors 212 may be mounted on one or more of the agricultural vehicle 104 or the cart 106. In some embodiments, one or more of the additional sensors 212 includes a field of view that faces forward on the agricultural vehicle 104 (e.g., in a direction of travel of the agricultural vehicle). In some embodiments, one or more of the additional sensors 212 includes a field of view that faces an interior of the hopper 110 of the cart 106. In other words, one or more of the additional sensors 212 includes a field of view that views (e.g., encompasses) a commodity within the hopper 110 of the cart 106. Furthermore, while only one additional sensor 212 is depicted with respective fields of view 302, the other additional sensors 212 may include any of the fields of view 302 described herein.

Referring still to FIG. 1 through FIG. 3 together, in some embodiments, the guidance system 202 may optionally include a Global Navigation Satellite System (GNSS) receiver 214 ("GNSS receiver 214") configured to determine precise geographical location, velocity, and time by processing signals received from multiple satellites within global constellations such as GPS, GLONASS, Galileo, and BeiDou. In particular, during operation, the GNSS receiver 214 may at least substantially continuously acquire and track satellite signals and calculate time delays between signal transmission and reception to compute pseudoranges, which are then used to determine a position of the GNSS receiver 214 through trilateration. For example, the GNSS receiver 214 may utilize various algorithms and signal processing techniques to correct for various errors and ensure a relatively high accuracy. The GNSS receiver 214 may operate in conventional manners and may provide GNSS data to the guidance system 202. In some embodiments, the guidance system 202 may utilize sensor data acquired via the perception system 208 combined with GNSS data (e.g., position data) and/or IMU data to monitor and control the unloading system 114 of the cart 106, validate orientations of an auger system of the unloading system 114, align the cart 106 relative to a combine harvester during a harvesting operation, align the cart 106 relative to a selected transport vehicle, orient the cart 106 relative to the agricultural vehicle 104, and/or unload a commodity from the cart 106 to a selected transport vehicle. For example, as is described in greater detail below, in some embodiments, sensor data, GNSS data, and IMU data may be fused together to form enhanced fused data, and the enhanced fused data may be utilized to perform any of the foregoing acts. In some embodiments, as is described below, one or more sensor fusion algorithms may be utilized to combine the sensor data with GNSS data and/or IMU data.

The control system 204 and/or the guidance system 202 may optionally include a wireless transceiver 216 for communicating via one or more wireless networks, such as, for example, WI-FI, Bluetooth, cellular, Li-Fi, Zigbee, Z-wave, and radio waves. In some embodiments, the wireless transceiver 216 may include a multi-protocol wireless receiver. The guidance system 202 may communicate with the combine harvester 120, transport vehicles, remote devices, and/or the input/output device 206 via the wireless transceiver 216.

In some embodiments, as noted above, the input/output device 206 may be remote from the guidance system 202 and may allow an operator of the agricultural vehicle 104 to provide input to, receive output from, and otherwise transfer data to and receive data from guidance system 202 of the control system 204. In some embodiments, the input/output device 206 may be within the cabin of the agricultural vehicle 104. In other embodiments, the input/output device 206 may be remote from agricultural vehicle 104. The input/output device 206 may include a mouse, a keypad or a keyboard, a joystick, a touch screen, a camera, an optical scanner, network interface, modem, other known I/O devices, or a combination of such I/O interfaces. The input/output device 206 may include one or more devices for presenting output to an operator, including, but not limited to, a graphics engine, a display (e.g., a display screen), one or more output drivers (e.g., display drivers), one or more audio speakers, and one or more audio drivers. In certain embodiments, the input/output device 206 is configured to provide graphical data to a display for presentation to an operator. The graphical data may be representative of one or more graphical user interfaces and/or any other graphical content as may serve a particular implementation. As is described in greater detail below, the control system 204 and the input/output device 206 may be utilized to display data (e.g., images and/or video data) received from the one or more guidance systems 202 and provide one or more recommendations of adjusting operation of the agricultural vehicle 104 and/or the cart 106 and/or video data to assist an operator in navigating the agricultural vehicle 104 and/or the cart 106.

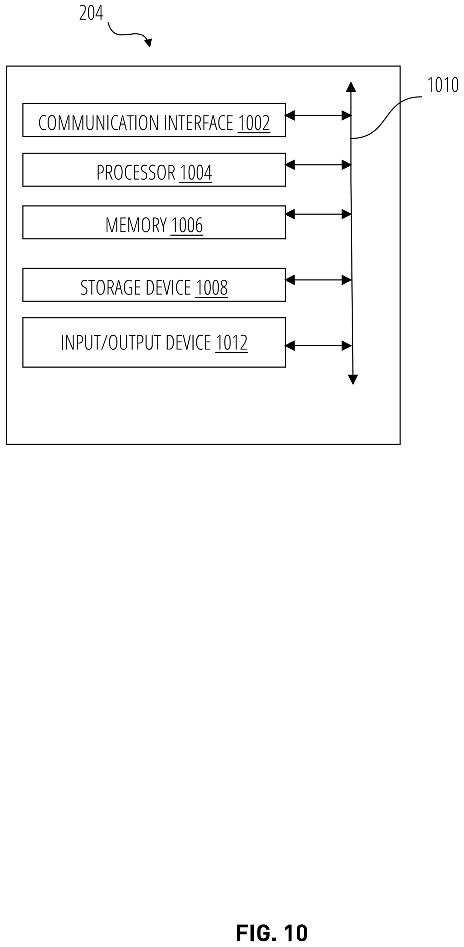

In some embodiments, the input/output device 206 may be part of a client device. The client device may include various types of computing devices with which operators can interact. For example, the client device may be a mobile device (e.g., a cell phone, a smartphone, a PDA, a tablet, a laptop, a watch, a wearable device, a smart speaker, etc.). In some embodiments, however, the client device may be a non-mobile device (e.g., a desktop or server). Additional details with respect to the client device are discussed below with respect to FIG. 10. Likewise, the control system 204 may include various types of computing devices. The control system 204 is described in greater detail below in regard to FIG. 17.

Referring still to FIG. 1 through FIG. 3, while the guidance system 202 is described as being part of the control system 204 of the agricultural vehicle 104, the disclosure is not so limited. Rather, the guidance system 202 may be part of (e.g., operated on) another device in communication with the control system 204 of the agricultural vehicle 104. In further embodiments, the guidance system 202 may be part of or operated on one or more servers or remote devices in communication with the control system 204. Additionally, while FIG. 2 through FIG. 3 show the guidance system 202 as being part of and/or utilized in relation to operation of an agricultural vehicle 104 and a cart 106, the disclosure is not so limited. Rather, the guidance system 202 may be part of and/or utilized in relation to operation of any agriculture vehicle (e.g., a combine) and/or implement.

The guidance system 202 may enable the autonomous agricultural system 102 to detect and select an appropriate transport vehicle into which the autonomous agricultural system 102 may unload a commodity (e.g., grain) subsequent to receiving the commodity from a harvester (e.g., combine harvester). For example, responsive to approaching an unloading gate and/or unloading area of an agricultural field (e.g., a designated area or structure where harvested crops are intended to be transferred from field equipment, like combines or grain carts, to transport vehicles or storage facilities), the control system 204 of the agricultural vehicle 104 may cause the sensors 210 of the control system 204 to detect vehicles (e.g., transport vehicles) within a given vicinity, select a transport vehicle, guide the agricultural vehicle 104 and cart 106 to the selected transport vehicle, and align the agricultural vehicle 104 and cart 106 with the transport vehicle.

Additionally, as is described below, the guidance system 202 may enable the autonomous agricultural system 102 to detect the combine harvester 120 or parts of the combine harvester 120 (e.g., a header 126, a body 130, and/or unloading auger 128 of the combine harvester 120) and to align with the combine harvester 120 for receiving a harvested commodity from the combine harvester 120. For example, the guidance system 202 of the autonomous agricultural system 102 may cause the sensors 210 of the perception system 208 to detect a combine harvester 120 within a given vicinity of the agricultural vehicle 104, guide the autonomous agricultural system 102 to the combine harvester 120, and align the autonomous agricultural system 102 with the combine harvester 120.

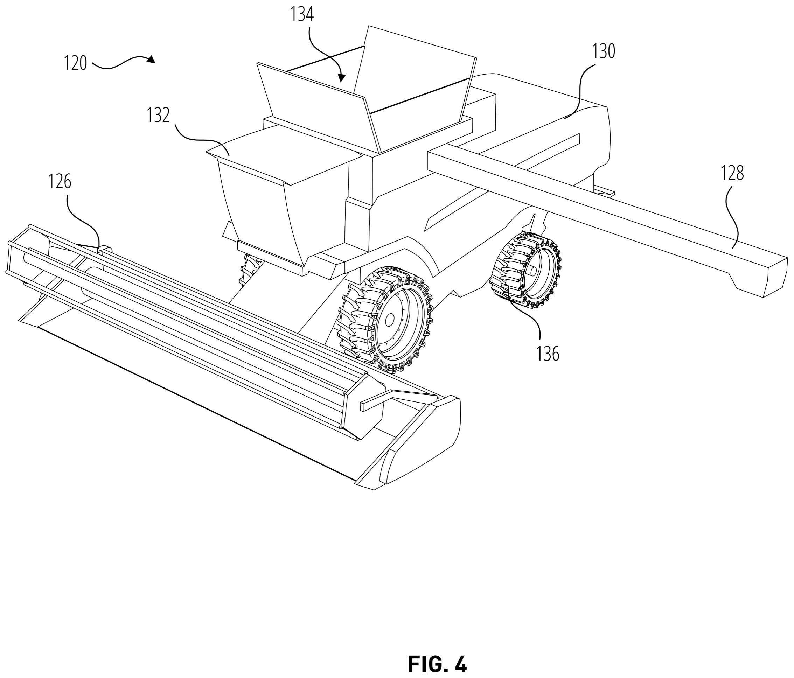

FIG. 4 is a perspective view of the combine harvester 120 according to one or more embodiments of the present disclosure. As noted above, the combine harvester 120 may include a header 126, a body 130 supported by wheels 136 and including a cabin 132 and commodity tank 134, and an unloading auger 128. The combine harvester 120 may further include a feeder house, a threshing drum, a separating system, and a cleaning system.

FIG. 5 shows a front side view of the cart 106 according to one or more embodiments of the disclosure. As noted above, the cart 106 may include an unloading system 114. The unloading system 114 may be utilized to unload the commodity from the hopper 110 and into one or more of the plurality of transport vehicles. As mentioned above, the unloading system 114 may include an auger system 502 including an auger 504 and a hydraulic motor 506. The auger 504 may include an upper vertical auger portion 508 and a lower vertical auger portion 510.

FIG. 5 depicts the auger 504 of the auger system 502 in an unfolded state (e.g., an extended state) for an unloading process. As shown in FIG. 5, when the auger of the auger system 502 is in a first unfolded state (e.g, extended state, unload state), the upper vertical auger portion 508 and the lower vertical auger portion 510 may be aligned relative to one another and may share a common center longitudinal axis. In other words, a center longitudinal axis of the upper vertical auger portion 508 may be collinear with a center longitudinal axis of the lower vertical auger portion 510. Moreover, the upper vertical auger portion 508 and the lower vertical auger portion 510 may defined a single, at least substantially straight, pathway (e.g., tube) for the commodity to travel through.

The auger 504 of the auger system 502 may be configurable in a folded state (e.g., retracted state, storage state, field state) as well. When the auger of the auger system 502 is in a folded state (e.g, retracted state), the upper vertical auger portion 508 and the lower vertical auger portion 510 may be unaligned relative to one another and may not share a common center longitudinal axis. Rather, a center longitudinal axis of the upper vertical auger portion 508 may be oriented at an acute angle relative to the lower vertical auger portion 510. Furthermore, in the folded state and retracted state, the auger 504 may be folded back on itself. When the auger 504 of the cart 106 is in the folded state (e.g, a retracted state), the auger may be against the hopper 110 of the cart 106. The folded state (e.g., a retracted state) may be used during transport or storage to reduce the cart's 106 width and prevent damage to the auger 504.

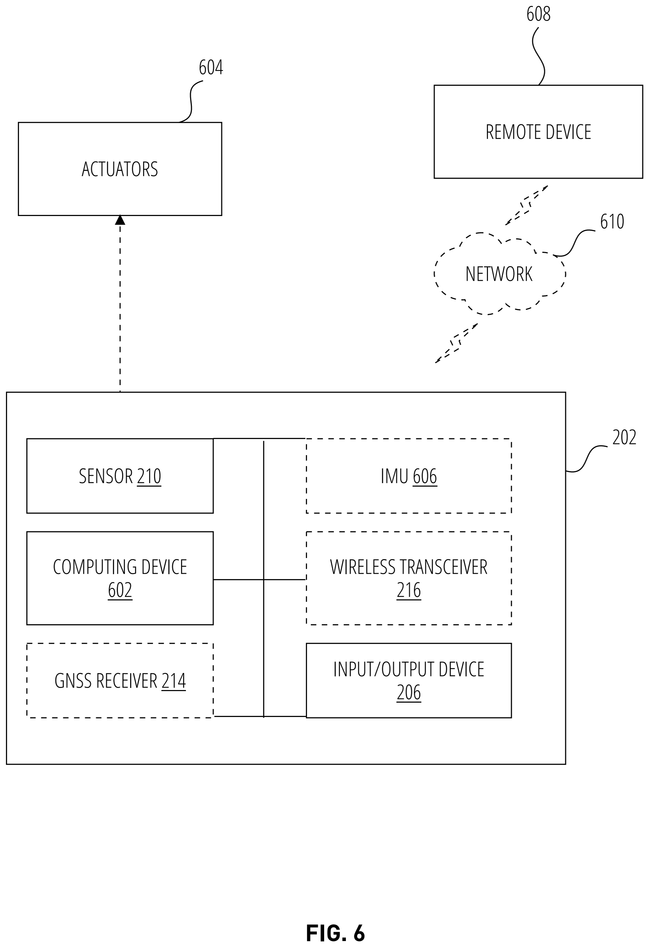

FIG. 6 is a schematic view of a guidance system 202 according to one or more embodiments of the disclosure. In one or more embodiments, the guidance system 202 may include a computing device 602, an input/output device 206, and one or more sensors sensor 210. The one or more sensors 210 and the input/output device 206 may be in operable communication with the computing device 602 and may be configured to provide data to and/or receive data and/or signals from the computing device 602. In additional embodiments, the one or more sensors 210 and/or the input/output device 206 may be separate and distinct from the guidance system 202 (e.g., as partially depicted in FIG. 1) and may be in operable communication with the guidance system 202. The computing device 602 may optionally be further operably coupled to actuators 604 of an agricultural vehicle (e.g., agricultural vehicle 104) and/or a cart (e.g., cart 106). The actuators 604 may include hydraulic valves, power switches, and/or any other known actuators for controlling operation of agricultural vehicles and carts (e.g., grain carts).

The one or more sensors 210 may include any of the sensors 210 described above in regard to FIG. 1, FIG. 2, and FIG. 3 or any combination thereof.

As is described in greater detail below, the computing device 602 may include a communication interface, a processor, a memory, a storage device, the input/output device 206, and a bus. The computing device 602 is described in greater detail in regard to FIG. 10. In input/output device 206 may include any of the input/output devices 206 described above. In some embodiments, the guidance system 202 may not be coupled to actuators 604 of an agricultural vehicle and/or a cart.

Referring still to FIG. 6, in some embodiments, the guidance system 202 may optionally include an inertial measurement unit (IMU 606). The IMU 606 may be operably coupled to the computing device 602 and may provide measured and/or calculated data to the computing device 602. The IMU 606 may include a device that is configured to measure and output specific force, attitude, velocity, angular rate, and/or an orientation of a moving object (e.g., an agricultural vehicle) relative to a reference frame. The IMU 606 may combine accelerometers (for linear acceleration) and gyroscopes (for rotational rate) to determine the object's motion. In one or more embodiments, the IMU 606 may also include one or more magnetometers for heading reference.

Additionally, as noted above, the guidance system 202 may optionally include a GNSS receiver 214. The GNSS receiver 214 may be configured to determine precise geographical location, velocity, and time by processing signals received from multiple satellites within global constellations such as GPS, GLONASS, Galileo, and BeiDou. In particular, during operation, the GNSS receiver 214 may at least substantially continuously acquire and track satellite signals and calculate time delays between signal transmission and reception to compute pseudoranges, which are then used to determine a position of the GNSS receiver 214 through trilateration. For example, the GNSS receiver 214 may utilize various algorithms and signal processing techniques to correct for various errors and ensure a relatively high accuracy. The GNSS receiver 214 may operate in conventional manners and may provide GNSS data to the guidance system 202.

Furthermore, as noted above, the guidance system 202 may optionally include a wireless transceiver 216 for communicating via one or more wireless networks, such as, for example, WI-FI, Bluetooth, cellular, Li-Fi, Zigbee, Z-wave, and radio waves. In some embodiments, the wireless transceiver 216 may include a multi-protocol wireless receiver. The guidance system 202 may communicate with the transport vehicles, remote devices, and/or the input/output device 206 via the wireless transceiver 216.

As mentioned above, the input/output device 206 may be remote from the guidance system 202 and may allow an operator of the agricultural vehicle 104 to provide input to, receive output from, and otherwise transfer data to and receive data from guidance system 202 of the control system 204. In some embodiments, the input/output device 206 may be within the cabin 124 of the agricultural vehicle 104. In other embodiments, the input/output device 206 may be remote from agricultural vehicle 104. The input/output device 206 may include a mouse, a keypad or a keyboard, a joystick, a touch screen, a camera, an optical scanner, network interface, modem, other known I/O devices, or a combination of such I/O interfaces. The input/output device 206 may include one or more devices for presenting output to an operator, including, but not limited to, a graphics engine, a display (e.g., a display screen), one or more output drivers (e.g., display drivers), one or more audio speakers, and one or more audio drivers. In certain embodiments, the input/output device 206 is configured to provide graphical data to a display for presentation to an operator. The graphical data may be representative of one or more graphical user interfaces and/or any other graphical content as may serve a particular implementation. As is described in greater detail below, the control system 204 and the input/output device 206 may be utilized to display data (e.g., images and/or video data) received from the one or more guidance systems 202 and provide one or more recommendations of adjusting operation of the agricultural vehicle 104 and/or the cart 106 and/or video data to assist an operator in navigating the agricultural vehicle 104 and/or the cart 106.

In some embodiments, the input/output device 206 may be part of a client device. The client device may include various types of computing devices with which operators can interact. For example, the client device may be a mobile device (e.g., a cell phone, a smartphone, a PDA, a tablet, a laptop, a watch, a wearable device, a smart speaker, etc.). In some embodiments, however, the client device may be a non-mobile device (e.g., a desktop or server). Additional details with respect to the client device are discussed below with respect to FIG. 10. Likewise, the control system 204 may include various types of computing devices. The control system 204 is described in greater detail below in regard to FIG. 10.

In some embodiments, the guidance system 202 may be in communication with (e.g., be operably coupled) to one or more remote devices 608. The one or more remote devices 608 can represent various types of computing devices with which users can interact. For example, the one or more remote devices 608 can be a mobile device (e.g., a cell phone, a smartphone, a PDA, a tablet, a laptop, a watch, a wearable device, etc.). In some embodiments, however, the one or more remote devices 608 can be a non-mobile device (e.g., a desktop or server). In some embodiments, the one or more remote devices 608 include one or more servers (e.g., computer or software systems) configured to provide services, data, or resources to other computers over a network. Furthermore, in some embodiments, the one or more remote devices 608 and the input/output device 206 may be a same device. Furthermore, the one or more remote devices 608 may perform and/or assist in performing any of the actions and processes attributed to the guidance system 202.

Additionally, the guidance system 202 may be in communication with computing devices of the combine harvester 120 and/or transport vehicles.

The guidance system 202 may communicate with the one or more remote devices 608 and/or computing devices via a network 610. The network 610 may include one or more networks, such as the Internet, and can use one or more communications platforms or technologies suitable for transmitting data and/or communication signals.

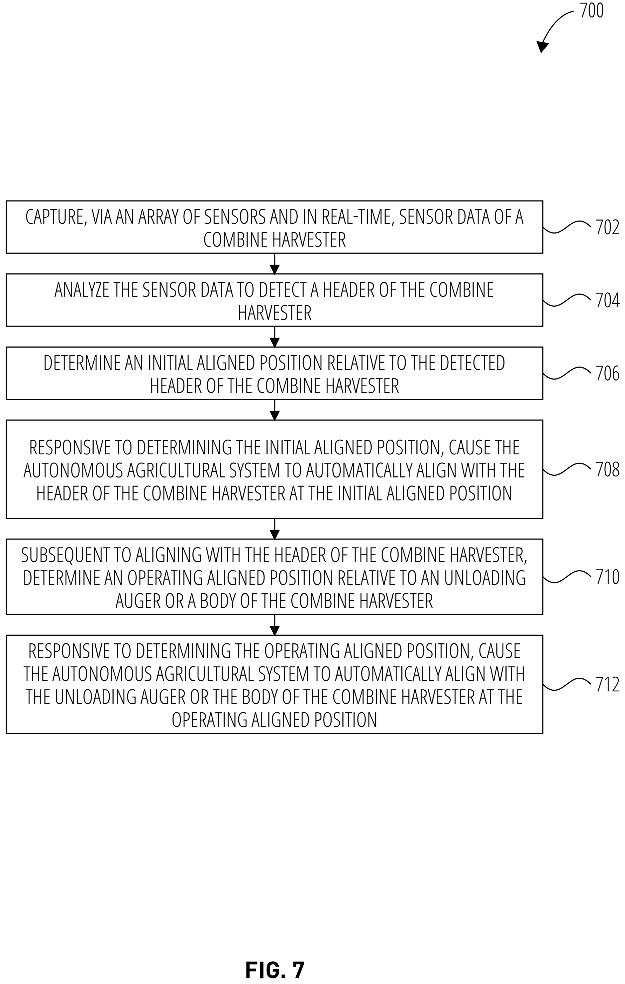

FIG. 7 shows a flowchart of a method 700 of monitoring and controlling operation of a cart (e.g., cart 106) and/or agricultural vehicle (e.g., agricultural vehicle 104) (e.g., a tractor). In one or more embodiments, a guidance system (e.g., guidance systems 202) may perform one or more acts of the method 700. For purposes of description of FIG. 7, the guidance system 202 is described as performing one or more acts of the method 700; however, it is understood that, in some embodiments, one or more acts of the method 700 may be performed by the control system 204 of the agricultural vehicle 104 and/or one or more remote devices (e.g., remote devices 608). Furthermore, although the example method 700 depicts a particular sequence of operations, the sequence may be altered without departing from the scope of the present disclosure. For example, some of the operations depicted may be performed in parallel or in a different sequence that does not materially affect the function of the method 700. In other examples, different components of an example device or system that implements the method 700 may perform functions at substantially the same time or in a specific sequence.

The method 700 may include capturing, via an array of sensors and in real-time, sensor data of a combine harvester 120, as shown in act 702 of FIG. 7. For example, the guidance system 202 may cause the array of sensors 210 to capture sensor data of the combine harvester 120. In some embodiments, capturing sensor data of the combine harvester 120 may include capturing representations of the combine harvester 120 within the sensor data. The one or more sensors 210 may include any of the sensors described herein, and the sensor data may include any of the sensor data described herein (e.g., image data, depth data (e.g., LIDAR and/or RADAR data), thermal data). Furthermore, in some embodiments, the guidance system 202 may utilize any of the additional sensors 212 described herein to capture one or more portions of the sensor data. In some embodiments, the image data may be captured in real-time and/or continuously.

In some embodiments, capturing the sensor data may be triggered by the autonomous agricultural system 102 (FIG. 2) leaving an unloading gate and/or unloading area of an agricultural field (e.g., a designated area or structure where harvested crops are intended to be transferred from field equipment, such as, combines or grain carts, to transport vehicles or storage facilities) and approaching a harvesting area of the agricultural field (e.g., an area of the agricultural field where crops are actively being cut and collected by machinery, such as the combine harvester 120). For example, responsive to the autonomous agricultural system 102 crossing a geofence and/or virtual boundary, the guidance system 202 of the autonomous agricultural system 102 may cause the one or more sensors 210 to begin to capture sensor data related to the combine harvester 120. In additional embodiments, the guidance system 202 of the autonomous agricultural system 102 may monitor or be in communication with a device that monitors a geofence and/or virtual boundary and may cause the one or more sensors 210 to begin to capture sensor data related to the combine harvester 120 responsive to crossing the geofence and/or virtual boundary. As a result of the foregoing, in some embodiments, capturing the sensor data may be triggered at the initiation of a harvesting operation and/or subsequent to an unloading process. In some embodiments, capturing, via the array of sensors and in real-time, sensor data of the combine harvester 120 may be triggered by completing an unloading process. In some embodiments, capturing the sensor data may be performed at least substantially continuously throughout the agricultural process (e.g., harvesting operation) or a portion of the agricultural process.

The method 700 may further include analyzing the sensor data to detect a header 126 of the combine harvester 120, as shown in act 704 of FIG. 7. For example, the guidance system 202 may analyze the sensor data detect the header 126 of the combine harvester 120. As used herein, the term "detect" when used in reference to using sensor data to detect one or more object represented in the sensor data refers to identifying and classifying objects represented in the sensor data. Detecting an object may further include generate labeled sensor data based on the identified and classified objects.

In some embodiment, the sensor data may be analyzed to identify and classify objects (e.g., the combine harvester 120, the header 126 of the combine harvester 120, the agricultural vehicle 104, the cart 106, a transport vehicle, living organisms, obstacles) depicted within the sensor data. For example, the guidance system 202 may analyze the sensor data to identify and classify objects depicted in the sensor data. In some embodiments, the guidance system 202 may determine bounding boxes (e.g., a point, width, and height) of the detected objects. In additional embodiments, the guidance system 202 may perform object segmentation (e.g., object instance segmentation or sematic segmentation) to associate specific pixels of the sensor data with the detected one or more objects. In further embodiments, the guidance system 202 may classify (e.g., label) the detected objects according to determined object types.

In some embodiments, the sensor data may be analyzed via deep learning techniques (e.g., deep neural networks) to detect and classify the objects within the sensor data. For example, the guidance system 202 may utilize one or more of deep neural network (DNN) instance models, convolutional neural networks (CNNs), single shot detectors (SSDs), region-convolutional neural networks (R-CNNs), Faster R-CNN, Region-based Fully Convolutional Networks (R-FCNs) and other machine learning models to perform the object detection and classification. In some embodiments, analyzing the sensor data may be performed utilizing one or more other or additional algorithms or models, such as, a YOLO (You Only Look Once) algorithm, Single Shot MultiBox Detector, EfficientDet, RetinaNet, DeepLab, U-Net, or MobileNet.

Any of the foregoing models may be trained to perform object detection and classification. For example, in some embodiments, the models may be trained using a combination of real sensor data (e.g., sensor data captured via one or more sensors) and synthetic data (e.g., data that is artificial generated using algorithms and/or computer simulations). In some embodiments, the synthetic data may include sensor data depicting objects of interest (e.g., transport vehicles, agricultural vehicles, carts, living organisms, telecommunication boxes, safety poles, power boxes, road markers, road signs, etc.) with differing environments (e.g., types, amounts, and heights of vegetation, occlusion levels, light configurations, viewing angles and types (e.g., fish eye and perspective)).

In one or more embodiments, analyzing the sensor data to identify and classify objects within the sensor data (e.g., the header 126 of the combine harvester 120) may include performing semantic segmentation on the sensor data. Performing the semantic segmentation may include classifying each pixel in a given image into a specific category, such as "agricultural vehicle," "trailer," "transport truck," "cart," or "background." The pixel-level classification may ensure precise identification and differentiation between various objects (e.g., components) within a scene captured within the sensor data.

Referring still to act 704 of FIG. 7, in some embodiments, sensor data from multiple sensors 210 (e.g., sensor data from sensors 210) may be combined to generate combined sensor data, and the guidance system 202 may perform the one or more object detection operations on the combined sensor data. Furthermore, the combined sensor data may be analyzed to generate the labeled sensor data. In other embodiments, the guidance system 202 performs the one or more object detection operations on the sensor data from each sensor 210 individually and generates labeled sensor data based on the sensor data from each sensor 210. In some embodiments, the guidance system 202 is configured to perform object tracking operation on the detected objects in the labeled sensor data, each tracked object defined by pixels of the sensor data (e.g., color data, SWIR data, NIR data). In some embodiments, the sensors 210 include at least partially overlapping fields of view 302. In additional embodiments, the sensor 210 may not include overlapping fields of view 302.

In one or more embodiments, the object segmentation (e.g., semantic segmentation) operation may be performed on the sensor data from each sensor 210 separately or may be performed on combined sensor data. In some embodiments, the object segmentation operation includes an instance segmentation operation. The object detection, object segmentation, and/or object tracking may be performed using an object detection neural network specifically trained for identifying and labeling one or more agricultural objects (e.g., the combine harvester 120 and the header 126 of the combine harvester 120) to generate the labeled sensor data. The object detection neural network may include associations between different types of agricultural objects (e.g., the combine harvester 120, the header 126 of the combine harvester 120, the agricultural vehicle 104 (e.g., tractor), the cart 106, the unloading system 114 of the cart 106, a transport vehicle, etc.), which may be provided in metadata of the labeled sensor data. In embodiments where the sensor data has been segmented, the sensor data may not include pixels that have not been labeled as an object and/or have been labeled as an object of interest (e.g., an agricultural object) (background pixels).

In some embodiments, the analyzing the sensor data to identify and classify the header 126 of the combine harvester 120 may include detecting features of detected objects. As used herein "features" refers to specific identifiable parts and/or characteristics of objects captured in the sensor data. The features may include elements such as the header 126, the cabin 132, the commodity tank 134, the body 130, the unloading auger 128, the wheels 136, etc. The features may be detected and classified using any of the techniques described herein.

In some embodiments, analyzing the sensor data to detect the header 126 of the combine harvester 120 and determining a position and orientation of the detected header 126 and/or the combine harvester 120 from the captured sensor data (e.g., image data, video data, LIDAR data, RADAR data, thermal data, 3D data, and/or sound data). For example, using the one or more sensors 208 to capture sensor data and analyzing the captured sensor data via any of the manners described herein to identify and classify the detected header 126 within the sensor data, the guidance system 202 may determine a position and an orientation of the detected header 126 relative to the autonomous agricultural system 102.

For example, when using two-dimensional sensor data, the guidance system 202 may extract the position and the orientation of the header 126 of the combine harvester 120 within the image plane (e.g., x, y coordinates). In other words, the guidance system 202 extracts the position and the orientation of the header 126 of the combine harvester 120 in the captured images. For example, via the analyses described herein, features of objects may be detected, and the features may be matched across two-dimensional sensor data captured by differing sensors. Furthermore, the matched features and known sensor 210 positions may be used to triangulate 3D positions of the detected objects (e.g., header 126 of the combine harvester 120). Moreover, pose estimation algorithms (e.g., Perspective-n-Point (PnP), OpenPose, DeepLabCut, AlphaPose, HRNet, PoseNet, DensePose, PointNet) can be used to estimate the relative positions and orientations of the detected objects.

Additionally, when using 3D sensor data, depth information is also captured, and the position and the orientation of the header 126 of the combine harvester 120 may be extracted in a x, y, and z coordinates (e.g, a 3D space). Subsequently, the guidance system 202 may apply one or more geometric transformations (e.g., triangulation, depth estimation, pose estimation (e.g., Perspective-n-Point (PnP))) to convert the position and the orientation of the header 126 of the combine harvester 120 within the sensor data from the sensor's coordinate system (e.g., the sensor's point of view) to a real-world coordinate system (e.g., GNSS position). In particular, a known GNSS position of the autonomous agricultural system 102 (i.e., a known position of the guidance system 202) and the determined position and the determined orientation of the detected header 126 relative to the autonomous agricultural system (e.g., sensor 208 may be used to estimate GNSS positions of the detected header 126).

In some embodiments, the determined position and/or the determined orientation of the detected header 126 of the combine harvester 120 are cross-referenced with other data acquired by the guidance system 202. For example, responsive to determining the position and the orientation of the detected header 126 of the combine harvester 120, the determined position and/or the determined orientation may be compared to GNSS data received from the combine harvester 120, IMU data received from the combine harvester 120, etc.

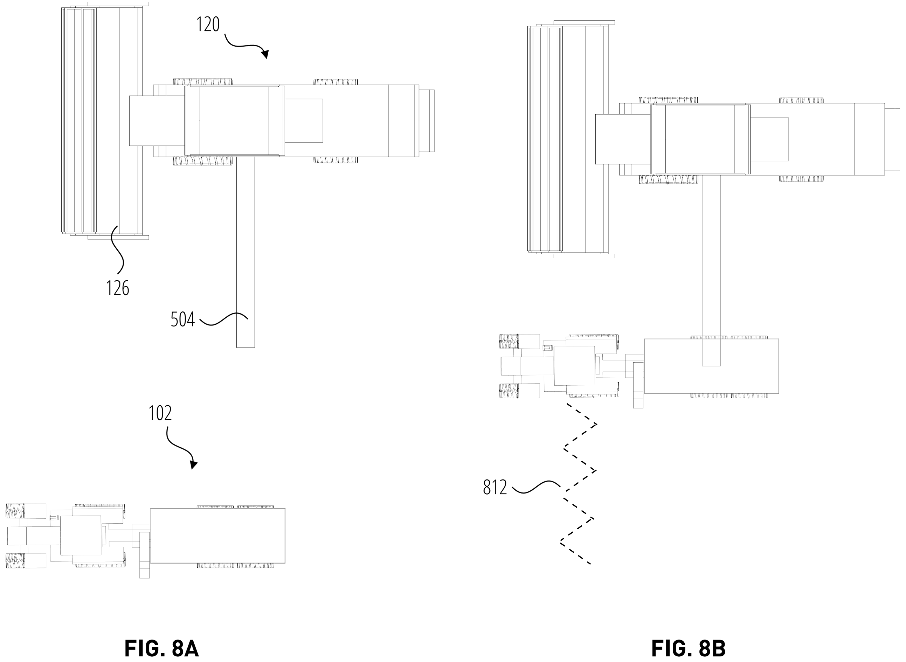

Additionally, the method 700 may include determining an initial aligned position relative to the detected header 126 of the combine harvester 120, as shown in act 706 of FIG. 7. For example, the guidance system 202 may determine the initial aligned position. For example, the guidance system 202 may, based at least partially on the labeled sensor data and the detected position and the detected orientation of the header 126 of the combine harvester 120, determine the initial aligned position of the cart 106 relative to the header 126 of the combine harvester 120. FIG. 8A is a schematic top view of the autonomous agricultural system 102 and the combine harvester 120 with the autonomous agricultural system 102 in an example initial aligned position.

Referring to FIG. 7 and FIG. 8A together, as used herein, an "initial aligned position" may refer to a position and an orientation of the autonomous agricultural system 102 relative to a position and an orientation of a header 126 of a combine harvester 120 that aligns the autonomous agricultural system 102 to a lateral side of the header 126 or immediately behind the header 126 relative to the forward direction of travel. Furthermore, when the autonomous agricultural system 102 is aligned to a lateral side of the header 126 in the initial aligned position, the autonomous agricultural system 102 may align with a longitudinal axis of the header 126 extending in a direction orthogonal to a direction of travel of the combine harvester 120 and parallel to a ground surface. Put another way, when the autonomous agricultural system 102 is aligned to a lateral side of the header 126 in the initial aligned position, the longitudinal axis of the header 126, if extended, would intersect with a portion of the autonomous agricultural system 102. Moreover, when the autonomous agricultural system 102 is aligned immediately behind the header 126 relative to the forward direction of travel, a front of the agricultural vehicle 104 of the autonomous agricultural system 102 may face a rear of the header 126 relative to the forward direction of travel of the combine harvester 120, and a distance between the autonomous agricultural system 102 and the header 126 in the forward direction of travel may be kept with a range of distances.

In some embodiments, the initial aligned position may be determined (e.g., calculated) based at least partially on a received position and orientation of the combine harvester 120 (e.g., a GNSS position of the combine harvester 120). Based at least partially on this data, the guidance system 202 may calculate the initial aligned position of the autonomous agricultural system 102 in relation to the combine harvester 120. The foregoing may include calculating the position and the orientation of the autonomous agricultural system 102 in relation to the header 126 within the initial aligned position.

In one or more embodiments, based at least partially on the extracted position and orientation of the header 126 of the combine harvester 120 within a real-world coordinate system (e.g., GNSS position), the guidance system 202 may determine an initial aligned position within the real-world coordinate system (e.g., GNSS position). Furthermore, the initial aligned position may be continuously updated as the combine harvester 120 moves within the agricultural vehicle 104. In additional embodiments, the initial aligned position may be determined according to the coordinate system of the sensors 210 (e.g., a point of view of the sensor 210)

In some embodiments, the initial aligned position may include an alignment distance (D) at which the initial aligned position is located from the combine harvester 120. In some embodiments, the alignment distance (D) is measured in a direction that is orthogonal to a center longitudinal axis of the combine harvester 120 (e.g., an axis that extends from a front to a rear of the combine harvester 120). For example, the alignment distance (D) may be a distance by which the initial aligned position is laterally offset from a lateral side of the header 126.

The method 700 may further include, responsive to determining the initial aligned position, cause the autonomous agricultural system 102 to automatically align with the header 126 of the combine harvester 120 at the initial aligned position, as shown in act 708 of FIG. 7. For example, the guidance system 202 may control one or more actuators and one or more operations (e.g., steering and propulsion) of the autonomous agricultural system 102 to cause the autonomous agricultural system 102 to align with the combine harvester 120 in the initial aligned position.

Causing the autonomous agricultural system 102 to automatically align with the header 126 of the combine harvester 120 at the initial aligned position may include utilizing the determined position and the determined orientation of the header 126 (e.g., a determined position and a determined orientation determined above in regard to act 702 through act 706), and/or a position and an orientation of the autonomous agricultural system 102 (e.g., a GNSS position of the autonomous agricultural system 102). In particular, the guidance system 202 may utilize a determined position and orientation of the header 126 of the combine harvester 120 and a position and an orientation of the autonomous agricultural system 102 (e.g., determined via the GNSS receiver 214) to determine a starting position (e.g., present position) of the autonomous agricultural system 102 relative to the initial aligned position of the autonomous agricultural system 102.

Causing the autonomous agricultural system 102 to automatically align with the header 126 of the combine harvester 120 may further include determining a path (e.g., immediate path, approach path) to the initial aligned position from a current position of the autonomous agricultural system 102. For example, the guidance system 202 may determine the path from the current position of the autonomous agricultural system 102 to the initial aligned position. In some embodiments, the guidance system 202 may utilize the sensor data and/or the labeled sensor data to determine a path (e.g., immediate path, approach path) from the current position of the autonomous agricultural system 102 to the initial aligned position. In one or more embodiments, the guidance system 202 may further utilize the sensor data and/or the labeled sensor data to identify obstacles in the determined path (e.g., immediate path, approach path). Additionally, the guidance system 202 may perform dynamic path adjustments using the sensor data and/or the labeled sensor data, which is captured and analyzed in real-time data, to adjust the determined path (e.g., immediate path, approach path) to avoid the identified obstacles. Furthermore, the guidance system 202 may utilize one more path planning algorithms and machine learning techniques to determine the path (e.g., immediate path, approach path) from the current position of the autonomous agricultural system 102 to the initial aligned position.

Additionally, the method 700 may include, subsequent to aligning the autonomous agricultural system 102 with the header 126 of the combine harvester 120, determining an operating aligned position relative to an unloading auger 128 or a body 130 of the combine harvester 120, as shown in act 710 of FIG. 7. For example, the guidance system 202 may, subsequent to aligning the autonomous agricultural system 102 with the header 126 of the combine harvester 120, determine the operating aligned position relative to the unloading auger 128 or the body 130 of the combine harvester 120.

As used herein, an "operating aligned position" may refer to a position and an orientation of an autonomous agricultural system 102 relative to a position and an orientation of a combine harvester 120 that aligns the unloading auger 128 of the combine harvester 120 with the hopper 110 of the cart 106 of the autonomous agricultural system 102 for receiving a commodity into the hopper 110 of the cart 106. Put another way, the operating aligned position may represent a position and an orientation of the cart 106 relative to the combine harvester 120 and the unloading auger 128 of the combine harvester 120 that positions and orients the hopper 110 of the cart 106 such that the unloading auger 128 can effectively and appropriately unload a commodity into the hopper 110 of the cart 106 (e.g, positions and orients the hopper 110 of the cart 106 underneath a downspout of the unloading auger 128). In some embodiments, the operating aligned position may represent an optimized position and orientation of the cart 106 relative to a position and an orientation of a combine harvester 120. For instance, the operating aligned position may represent a position and an orientation of the cart 106 relative to the combine harvester 120 that positions and orients the cart 106 such that the unloading auger 128 of the combine harvester 120 can correctly and precisely unload the commodity into the hopper 110 of the cart 106. Furthermore, the operating aligned position may represent a position and an orientation of the cart 106 relative to the combine harvester 120 that positions and orients a downspout of the unloading auger 128 at least substantially centered (e.g., horizontally, laterally centered) over the hopper 110 of the cart 106. In other words, the operating aligned position may result in the downspout of the unloading auger 128 being at least substantially centered between lateral sidewalls of the hopper 110 of the cart 106. This positioning ensures that the commodity is evenly distributed and minimizes the risk of spillage. Centering the downspout of the unloading auger 128 allows for a more controlled and efficient unloading process, ensuring that the commodity flows directly into the hopper 110 without accumulating on one side.

In some embodiments, determining an operating aligned position relative to an unloading auger 128 or a body 130 of the combine harvester 120 include determining a position and an orientation of at least one of the unloading auger 128 or the body 130 of the combine harvester 120. For example, the guidance system 202 may determine the position and the orientation of at least one of the unloading auger 128 or the body 130 of the combine harvester 120.

In some embodiments, determining the position and the orientation of at least one of the unloading auger 128 or the body 130 of the combine harvester 120 include capturing additional sensor data of at least one of the unloading auger 128 or the body 130 of the combine harvester 120. The additional sensor data may be captured via any of the manners desribed above in regard to act 702 and via any of the sensors 210 described herein. Furthermore, based at least partially on the captured additional sensor data, the unloading auger and/or the body 130 of the combine harvester 120 may be detected via any of the manners and using any of the techniques described above in regard to act 702 through act 706 of FIG. 7. Furthermore, the position and the orientation of at least one of the unloading auger 128 or the body 130 of the combine harvester 120 may be determined via any of the manners and using any of the techniques described above in regard to act 702 through act 706 of FIG. 7.

In additional embodiments, the position and the orientation of at least one of the unloading auger 128 or the body 130 of the combine harvester 120 may be determined based on known structure and known geometry of the combine harvester 120. For example, based on the determined position and orientation of the header 126, the position and the orientation of at least one of the unloading auger 128 or the body 130 of the combine harvester 120 may be inferred (e.g., determined). In some embodiments, data regarding the structure and geometry of the combine harvester 120 may be received by the guidance system 202 from one of the combine harvester 120 or a remote device 608. In additional embodiments, data regarding the structure and geometry of the combine harvester 120 may be acquired via querying a database of the guidance system 202 including data regarding the structure and geometry of various combine harvesters.

Referring still to act 710 of FIG. 7, based at least partially on the determined position and the determined orientation of at least one of the unloading auger 128 or the body 130 of the combine harvester 120, the guidance system 202 may calculate the operating aligned position of the autonomous agricultural system 102 in relative to either the unloading auger 128 or the body 130 of the combine harvester 120. The foregoing may include calculating the position and the orientation of the autonomous agricultural system 102 in relative to either the unloading auger 128 or the body 130 of the combine harvester 120 within the operating aligned position.

In some embodiments, based at least partially on the determined position and orientation of the at least one of the unloading auger 128 or the body 130 of the combine harvester 120 within a real-world coordinate system (e.g., GNSS position), the guidance system 202 may determine the operating aligned position within the real-world coordinate system (e.g., GNSS position). Furthermore, the operating aligned position may be continuously updated as the combine harvester 120 moves within the agricultural vehicle 104. In additional embodiments, the operating aligned position may be determined according to the coordinate system of the sensors 210 (e.g., a point of view of the sensor 210)

In some embodiments, the operating aligned position may include an alignment distance (D) at which the operating aligned position is located from the combine harvester 120. In some embodiments, the alignment distance (D) is measured in a direction that is orthogonal to a center longitudinal axis of the combine harvester 120 (e.g., an axis that extends from a front to a rear of the combine harvester 120). For example, the alignment distance (D) may be a distance by which the operating aligned position is laterally offset from a lateral side of the combine harvester 120.

The method 700 may further include, responsive to determining the operating aligned position, causing the autonomous agricultural system 102 to automatically align with the unloading auger 128 or the body 130 of the combine harvester 120 at the operating aligned position, as shown in act 712 of FIG. 7. For example, the guidance system 202 of the autonomous agricultural system 102 may control one or more actuators and one or more operations (e.g., steering and propulsion) of the agricultural vehicle 104 and the cart 106 to cause the operating aligned position to align with the unloading auger 128 or the body 130 of the combine harvester 120 at the operating aligned position.

FIG. 8B is a schematic top view of the autonomous agricultural system 102 in the operating aligned position relative to the combine harvester 120. Referring to FIG. 7, FIG. 8A, and FIG. 8B together, causing the autonomous agricultural system 102 to automatically align with the unloading auger 128 or the body 130 of the combine harvester 120 at the operating aligned position may include utilizing the determined position and the determined orientation of the unloading auger 128 or the body 130 of the combine harvester 120 (e.g., a determined position and a determined orientation determined above in regard to act 710), and/or a position and an orientation of the autonomous agricultural system 102 (e.g., the initial aligned position). In particular, the guidance system 202 may utilize a determined position and orientation of the unloading auger 128 or the body 130 of the combine harvester 120 and a position and an orientation of the autonomous agricultural system 102 (e.g., the initial aligned position) to determine a starting position (e.g., present position) of the autonomous agricultural system 102 relative to the operating aligned position of the autonomous agricultural system 102.

Causing the autonomous agricultural system 102 to automatically align with the unloading auger 128 or the body 130 of the combine harvester 120 may further include determining an alignment path 812 (e.g., immediate path, approach path) to the operating aligned position from a current position of the autonomous agricultural system 102 and causing the autonomous agricultural system 102 to travel along that path. For example, the guidance system 202 may determine the alignment path 812 from the current position of the autonomous agricultural system 102 to the operating aligned position. In some embodiments, the guidance system 202 may utilize the sensor data, the additional sensor data, and/or the labeled sensor data to determine the alignment path 812 (e.g., immediate path, approach path) from the current position of the autonomous agricultural system 102 to the operating aligned position. In one or more embodiments, the guidance system 202 may further utilize the sensor data, additional sensor data, and/or the labeled sensor data to identify obstacles in the determined path (e.g., immediate path, approach path). Additionally, the guidance system 202 may perform dynamic path adjustments using the sensor data, additional sensor data, and/or the labeled sensor data, which is captured and analyzed in real-time data, to adjust the alignment path 812 (e.g., immediate path, approach path) to avoid the identified obstacles. Furthermore, the guidance system 202 may utilize one more path planning algorithms and machine learning techniques to determine the alignment path 812 (e.g., immediate path, approach path) from the current position of the autonomous agricultural system 102 to the operating aligned position.

In some embodiments, causing the autonomous agricultural system 102 to automatically align with the unloading auger 128 or the body 130 of the combine harvester 120 may include causing the autonomous agricultural system 102 to perform a zig-zag maneuver while traveling along the alignment path 812. The alignment path 812 is depicted as a path traveled relative to the combine harvester 120 and does not depict a path traveled within the agricultural field. The zig-zag maneuver may include varying a velocity of the autonomous agricultural system 102 relative to a velocity of the combine harvester 120 (e.g., increasing the velocity of the autonomous agricultural system 102 above the velocity of the combine harvester 120 and subsequently decreasing the velocity of the autonomous agricultural system 102 below the velocity of the combine harvester 120) in an iterative manner to move autonomous agricultural system 102 relative to the combine harvester 120 in the direction of travel while at least substantially consistently steering the autonomous agricultural system 102 toward to combine harvester 120 until the autonomous agricultural system 102 is in the operating aligned position.

Referring still to FIG. 7, in some embodiments, the method 700 optionally further includes causing the autonomous agricultural system 102 to disengage from the operating aligned position and to travel toward an unloading area of an agricultural field. In one or more embodiments, causing the autonomous agricultural system 102 to disengage from the operating aligned position and to travel toward an unloading area of an agricultural field includes causing the autonomous agricultural system to perform another zig-zag maneuver to realign with header of the combine harvester at the initial aligned position and subsequent to aligning with the header of the combine harvester, causing the autonomous agricultural system to disengage from the initial aligned position and to travel toward the unloading area of the agricultural vehicle. The another zig-zag maneuver may be performed via the same manner described above while steering the autonomous agricultural system 102 away from the combine harvester 120.

Method 700 may optionally further include fusing the labeled sensor data with depth data (e.g., LIDAR data, RADAR data, 3D point-cloud data) captured via the sensors 210 to form labeled fused data. For example, the guidance system 202 may fuse the labeled sensor data with the depth data by correlating each point and/or pixel of the depth data with detected features and/or objects of the labeled sensor data to form labeled fused data. In some embodiments, two-dimensional image features of the labeled sensor data are mapped onto 3D point-cloud data of the depth data. Mapping the two-dimensional image features of the labeled sensor data onto the 3D point-cloud data of the depth data may include aligning coordinate systems of the sensors 210 utilized to capture the sensor data of the labeled sensor data and stereo camera system utilized to capture the depth data. Techniques such as image registration and transformation matrices may be used to achieve the alignment. Additionally, each point in the 3D point-cloud data may be matched with a corresponding feature in the 2D image data. For example, points in the 3D point-cloud data that represent the hopper 110 of the cart 106 may matched with hopper features detected in the 2D image data.

In some embodiments, fusing the labeled sensor data with the depth data may include fusing the labeled sensor data with the depth data via any of the manners described in U.S. Patent Applications No. 18/922,227, No. 18/922,252, No. 18/956,548, and No. 18/9222,267, to Christiansen et. al., filed on October 21, 2024. As a non-limiting example, labeled sensor data may be fused with the depth data using a fusion manager of the guidance system 202. The guidance system 202 may be configured to perform one or more or more sensor fusion operations to form labeled fused data including the labeled sensor data and the depth data. For example, the fusion manager of the guidance system 202 may be configured to project the depth data onto the labeled sensor data, such that the labeled fused data includes the labeled sensor data and the depth data in 2D space. In other words, in some such embodiments, the fusion of the labeled sensor data and the depth data occurs in 2D, and depth data is transposed into 2D space with the labeled sensor data and points in the depth data are matched to bounding boxes of objects (e.g., instances of objects and/or features labeled via the manners described herein) in the labeled sensor data. In some embodiments, the depth data includes more sparse data compared to the labeled sensor data. In some such embodiments, since the data fusion occurs in 2D, the data fusion may use less processing power and may process the data faster compared to data fusion in 3D.

Projecting the depth data onto the labeled sensor data may include formatting and aligning the depth data with the labeled sensor data, such as by aligning the timestamps of the depth data and labeled sensor data; transforming the 3D coordinates of the depth data to 2D using, for example, a projection matrix to map the 3D points onto a 2D plane (e.g., such as perspective projection or orthographic projection); and applying the projection matrix to each point in the depth data. In some embodiments, the point-cloud data of the depth data may be transformed into a lower-dimensional representation. For example, the guidance system 202 may transform the point-cloud data of the depth data utilizing a PointPillars algorithm. In some embodiments, transforming the point-cloud data of the depth data may include dividing the point-cloud data into vertical columns, or "pillars." Each pillar represents a small, localized region of a 3D space represented in the point-cloud data. In some embodiments, transformation of the point-cloud data of the depth data includes using a neural network, specifically PointNet, to encode features (e.g., coordinates of each point within a pillar, a strength of a reflected signal at each point of a pillar, a height of each point of a pillar relative to a ground surface, etc.). The encoding process reduces a dimensionality of the point-cloud data while preserving essential spatial information. By combining the 3D information from the point-cloud data with the visual information from labeled sensor data, the guidance system 202 may achieve a more comprehensive representations of the objects and environment depicted in the labeled sensor data.

The depth data may be projected onto the labeled sensor data with one or more fusion operations (e.g., fusion algorithms), such as MV3D, AVOD, voxels such as VoxelNet, F-PointNet, MVFP, and raw point clouds such as PointNet, PointNet++, and PointRCNN to convert the 3D data of the depth data to a 2D plane representation, such as a range view, spherical view, cylindrical view, or a bird's-eye view (BEV) projection techniques.

In some embodiments, the labeled fused data includes and corresponds to pixels of objects in the labeled sensor data and the depth data. In other words, pixels that do not include an object classification (e.g., an instance) may not be included in the labeled fused data. Stated another way, pixels of the background (not including objects) may be disregarded and may not be included in the labeled fused data. By way of non-limiting example, depth data may be projected onto the labeled sensor data and only pixels of the labeled fused data corresponding to the objects identified and classified in the labeled sensor data may be included in the labeled fused data. In other words, in some such embodiments, the labeled fused data may include only pixels corresponding to bounding boxes (discussed in greater detail below) of identified objects in the labeled sensor data and the corresponding data from the depth data.

In one or more embodiments, since the labeled sensor data fused with the depth data has been segmented, the fusion operation may be performed relatively faster and using less processing power compared to embodiments where the labeled sensor data has not been segmented. In other words, since the labeled sensor data fused with the depth data does not include the background pixels, the fusion operation may be performed significantly faster than conventional fusion operations. The faster fusion of the labeled sensor data and the depth data facilitates real-time object detection and avoidance during performance of one or more agricultural operations using the imaging controller.

As noted above, the guidance system 202 may determine bounding boxes (e.g., a point, width, and height) of objects detected in the labeled sensor data and/or the depth data by way of the transformation and segmentation processes described herein. In some embodiments, the bounding boxes may be determined during one or more of act 704 and/or act 710. In some embodiments, the guidance system 202 may define 3D bounding boxes around detected objections (e.g., the combine harvester 120, the unloading auger 128 of the combine harvester 120, the agricultural vehicle 104, the cart 106, a transport vehicle, etc.). The 3D bounding box may include a rectangular box that encapsulates a detected object in a 3D space. The 3D bounding boxes may be iteratively refined (e.g., boundaries of the bounding boxes may be iteratively adjusted) to ensure that the 3D bounding boxes accurately enclose detected objected. As a result, the 3D bounding boxes may provide relatively accurate representations of the positions and the orientations of each object detected in the labeled sensor data and the depth data.

In one or more embodiments, the guidance system 202 may integrate metadata into the labeled fused data to map classification onto 3D data (e.g., 3D point-cloud data). In some embodiments, the metadata may be integrated during or subsequent to one or more of act 704, act 706, and/or act 710. In some embodiments, the labeled fused data includes the metadata of the labeled sensor data and the metadata of depth data. By way of non-limiting example, each pixel of the labeled fused data may include one or more of (e.g., each of) RGB image data, SWIR image data, LWIR image data, a flag if pixels data from different sensors do not agree, priority data for pixels within overlapping fields of view of the sensor data, velocity, depth (e.g., distance) data, elevational data (e.g., elevational angle), azimuth data (e.g., azimuth angle), an object label (e.g., an instance label), association data, a timestamp, and metadata (e.g., object classification data, object association data, data with respect to which of multiple cameras the sensor data for each pixel is associated, flags for sensor data that does not match sensor data of another camera).

In some embodiments, the method 700 may not include fusing the labeled sensor data with the depth data, and the acts of method 700 may be performed using the depth data and/or the image data separately and/or without fusion.

Additionally, the method 700 may optionally include receiving or acquiring GNSS data and IMU data related to at least one of the combine harvester 120, the agricultural vehicle 104, the cart 106, or a transport vehicle. For example, the guidance system 202 may receive or acquire the GNSS data and the IMU data related to at least one of the combine harvester 120, the agricultural vehicle 104, the cart 106, or the transport vehicle. In some embodiments, the GNSS receiver 214 of the guidance system 202 may acquire the GNSS data via any of the manners described above. In one or more embodiments, the GNSS receiver 214 of the guidance system 202 may receive the GNSS data from a computing device of the combine harvester 120 and/or a transport vehicle. In some embodiments, the GNSS data is received wirelessly through one or more wireless communication protocols. In one or more embodiments, the GNSS data may be received by way of a wireless transceiver (e.g., wireless transceiver 216) of the guidance system 202. The GNSS data may include coordinate data, altitude data, velocity data, and time data.

The IMU data may be acquired via the IMU 606 of the guidance system 202. The IMU data may include one or more of a specific force, an attitude, a velocity, an acceleration, an angular velocity, and/or an orientation of a moving object (e.g., agricultural vehicle) at a given time. In additional embodiments, the IMU data may be received wirelessly through one or more wireless communication protocols from a computing device of one or more of the combine harvester 120 and/or a transport vehicle.

Moreover, the method 700 may optionally further include fusing the labeled fused data or the depth data with the GNSS data and IMU data to generate enhanced fused data. For example, the guidance system 202 may fuse the labeled fused data or the depth data with the GNSS data and IMU data to generate enhanced fused data.

In some embodiments, the guidance system 202 may fuse the labeled fused data or the depth data with the GNSS data and IMU data via one or more sensor fusion algorithms and/or data fusion techniques (e.g., Kalman Filters, Extended Kalman Filters, Unscented Kalman Filters, Complementary Filters, Particle Filters, Asynchronous Multi-Sensor Fusion, Event-Based Fusion, Time-Delayed Integration, a Factor Graph Optimization (FGO) algorithm, a Visual-Inertial Odometry (VIO) algorithm, Simultaneous Localization and Mapping (SLAM)) to form the enhanced fused data. The data fusion techniques may include one or more of synchronous data fusion techniques or asynchronous data fusion techniques.

As a non-limiting example, the guidance system 202 may use the VIO algorithm to combine visual data of the labeled fused data or the depth data (e.g., data used to form the depth data) with IMU data from the IMU 606 to estimate motion of one or more of the combine harvester 120, the agricultural vehicle 104, the cart 106, or a transport vehicle. The visual data provides information about a sensed environment, while the IMU data provides relatively accurate short-term motion estimates. By integrating the labeled fused data or the depth data with the IMU data, the guidance system 202 may achieve a relatively robust and accurate localization even in challenging conditions where GNSS signals might be weak or unavailable.

As another non-limiting example, the guidance system 202 may use the SLAM technique to identify and track features (e.g., objects) in image data of the labeled fused data or the depth data (e.g., data used to form the depth data), while using the GNSS data and the IMU data to determine additional positioning and motion information. By continuously updating a map of the perceived environment and the position of the combine harvester 120, the agricultural vehicle 104, the cart 106, or the transport vehicle via the SLAM technique, the guidance system 202 may achieve real-time localization and mapping, which may be used for autonomous navigation and determining the paths (e.g., the alignment path) described herein

In view of the foregoing, the enhanced fused data may provide a relatively comprehensive map of the autonomous agricultural system's 102 (e.g., cart 106 and agricultural vehicle 104 combination's) surroundings, enabling precise navigation and path planning during agricultural processes. The enhanced fused data may enable the improved obstacle detection and avoidance. By fusing the labeled fused data or the depth data (e.g., perception data) with GNSS data and/or the IMU data to form the enhanced fused data, the guidance system 202 may achieve higher levels of autonomy, efficiency, and safety relative to conventional systems.

Moreover, method 700 may optionally include causing the unloading system 114 of the cart 106 to unload a commodity from the hopper 110 of the cart 106 to a trailer of a transport vehicle. In particular, the guidance system 202 may activate the auger 504 or a conveyor of the cart 106, which may transfer the commodity from the hopper 110 of the cart 106 to the trailer of a transport vehicle. The commodity may flow through the auger 504, which is positioned over an opening of the trailer. The flow rate of the commodity may be monitored by the guidance system 202 and may adjust a position of the auger 504 to ensure even distribution of the commodity within the trailer, preventing overloading or spillage. Throughout the process, a level of the commodity in both the hopper 110 of the cart 106 and the trailer of the transport vehicle may be monitored, and the guidance system 202 may make adjustments as determined requisite to maintain a steady and efficient transfer. Once the hopper of the cart 106 is emptied, the guidance system 202 may shut off the auger 504. The transport vehicle and trailer may be transported to a next destination.

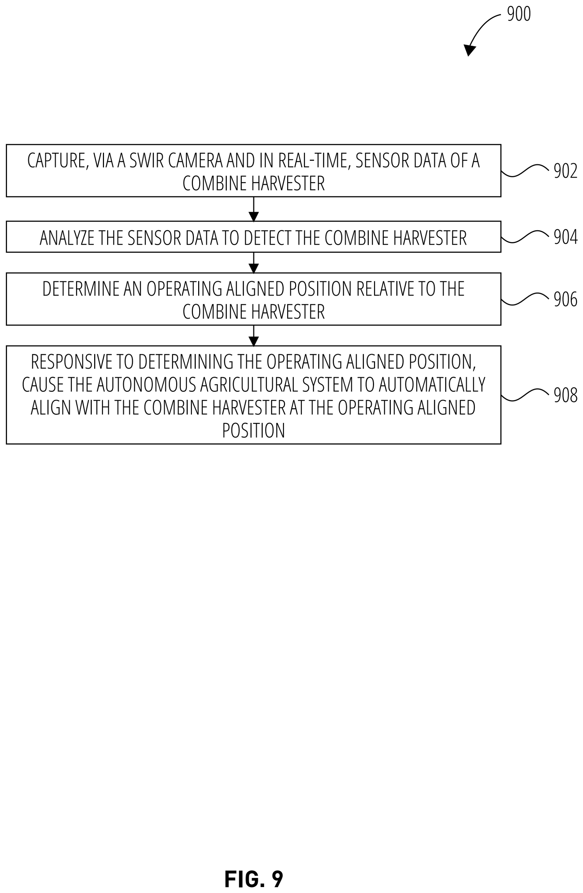

FIG. 9 shows a flowchart of a method 900 of monitoring and controlling operation of a cart (e.g., cart 106) and/or agricultural vehicle (e.g., agricultural vehicle 104) (e.g., a tractor). In one or more embodiments, a guidance system (e.g., guidance systems 202) may perform one or more acts of the method 900. For purposes of description of FIG. 9, the guidance system 202 is described as performing one or more acts of the method 900; however, it is understood that, in some embodiments, one or more acts of the method 700 may be performed by the control system 204 of the agricultural vehicle 104 and/or one or more remote devices (e.g., remote devices 608). Furthermore, although the example method 900 depicts a particular sequence of operations, the sequence may be altered without departing from the scope of the present disclosure. For example, some of the operations depicted may be performed in parallel or in a different sequence that does not materially affect the function of the method 900. In other examples, different components of an example device or system that implements the method 900 may perform functions at substantially the same time or in a specific sequence.

The method 900 may include any of the acts of method 700 except that the method 900 explicitly incorporates and utilizes SWIR sensor data captured via at least one SWIR camera. Within the acts of method 900, the SWIR sensor data may be utilized in combination with any of the sensor data described above in regard to method 700 and according to any of the manners described above in regard to FIG. 7 and/or instead (e.g., in place of) of any of the sensor data described above in regard to any of the acts of method 700.

In some embodiments, the method 900 includes capturing, via a SWIR camera and in real-time, sensor data of a combine harvester 120, as shown in act 902 of FIG. 9. For example, the guidance system 202 may cause the SWIR camera, which may be part of the arrays of sensors 210, to capture sensor data of the combine harvester 120. In some embodiments, capturing sensor data of the combine harvester 120 may include capturing representations of the combine harvester 120 within the sensor data. The SWIR camera may include any of the SWIR cameras described above in regard to FIG. 1 through FIG. 3.

Capturing the sensor data (e.g., SWIR sensor data) via the SWIR camera may include any of the acts, analyses, and processes described above in regard to act 702 of method 700 of FIG. 7; furthermore, capturing the sensor data may be triggered via any of the manners described above in regard to act 702 of method 700 of FIG. 7.

The method 900 may further include analyzing the sensor data to detect the combine harvester 120, as shown in act 904 of FIG. 9. For example, the guidance system 202 may analyze the sensor data detect the combine harvester 120.

In some embodiments, detecting the combine harvester 120 may include any of the acts, analyses, and processes described above in regard to act 704, act 706, and act 708 of method 700 of FIG. 7. For example, detecting the combine harvester 120 may include one or more of analyzing the sensor data to detect a header 126 of the combine harvester 120, determining an initial aligned position relative to the detected header 126 of the combine harvester 120, and responsive to determining the initial aligned position, causing the autonomous agricultural system to automatically align with the header 126 of the combine harvester 120 at the initial aligned position,

Additionally, the method 900 may include determining an operating aligned position relative to the combine harvester 120, as shown in act 906 of FIG. 9. For example, the guidance system 202 may determine the operating aligned position relative to the combine harvester 120.

Determining the operating aligned position relative to the combine harvester 120 may include any of the acts, analyses, and processes described above in regard to act 710 of method 700 of FIG. 7. For example, determining the operating aligned position relative to the combine harvester 120 may include detecting at least one of an unloading auger 128 or a body 130 of the combine harvester 120 via analysis of additional sensor data captured via the SWIR camera and determining the operating aligned position relative to at least one of the unloading auger 128 of the body 130 based at least partially on the analyses of the additional sensor data.

Moreover, the method 900 may include, responsive to determining the operating aligned position, causing the autonomous agricultural system 102 to automatically align with the combine harvester at the operating aligned position, as shown in act 908 of FIG. 9. For example, the guidance system 202 may, responsive to determining the operating aligned position, cause the autonomous agricultural system 102 to automatically align with the combine harvester at the operating aligned position.

Causing the autonomous agricultural system 102 to automatically align with the combine harvester at the operating aligned position may include any of the acts, analyses, and processes described above in regard to act 712 of FIG. 7.

Furthermore, the method 900 may further include any of the optional and/or additional acts described above in regard to method 700 of FIG. 7.

FIG. 10 is a schematic view of the control system 204 (e.g., computing device) that may implement the guidance system 202, which may operate one or more functions of the agricultural vehicle 104 and/or the cart 106 according to some embodiments of the disclosure. The control system 204 may include a communication interface 1002, a processor 1004, a memory 1006, a storage device 1008, and a bus 1010 in addition to the input/output device 1012.

In some embodiments, the processor 1004 includes hardware for executing instructions, such as those making up a computer program. As an example, and not by way of limitation, to execute instructions, the processor 1004 may retrieve (or fetch) the instructions from an internal register, an internal cache, the memory 1006, or the storage device 1008 and decode and execute them. In some embodiments, the processor 1004 may include one or more internal caches for data, instructions, or addresses. As an example, and not by way of limitation, the processor 1004 may include one or more instruction caches, one or more data caches, and one or more translation look aside buffers (TLBs). Instructions in the instruction caches may be copies of instructions in the memory 1006 or the storage device 1008.

The memory 1006 may be coupled to the processor 1004. The memory 1006 may be used for storing data, metadata, and programs for execution by the processor(s). The memory 1006 may include one or more of volatile and non-volatile memories, such as Random-Access Memory ("RAM"), Read-Only Memory ("ROM"), a solid state disk, Flash, Phase Change Memory ("PCM"), or other types of data storage. The memory 1006 may be internal or distributed memory.

The storage device 1008 may include storage for storing data or instructions. As an example, and not by way of limitation, storage device 1008 can comprise a non-transitory storage medium described above. The storage device 1008 may include a hard disk drive (HDD), a floppy disk drive, Flash memory, an optical disc, a magneto-optical disc, magnetic tape, or a Universal Serial Bus (USB) drive or a combination of two or more of these. The storage device 1008 may include removable or non-removable (or fixed) media, where appropriate. The storage device 1008 may be internal or external to the computing storage device 1008. In one or more embodiments, the storage device 1008 is non-volatile, solid-state memory. In other embodiments, the storage device 1008 includes read-only memory (ROM). Where appropriate, this ROM may be mask programmed ROM, programmable ROM (PROM), erasable PROM (EPROM), electrically erasable PROM (EEPROM), electrically alterable ROM (EAROM), or Flash memory or a combination of two or more of these.

The communication interface 1002 can include hardware, software, or both. The communication interface 1002 may provide one or more interfaces for communication (such as, for example, packet-based communication) between the control system 204 and one or more other computing devices or networks (e.g., a server, etc.). As an example, and not by way of limitation, the communication interface 1002 may include a network interface controller (NIC) or network adapter for communicating with an Ethernet or other wire-based network or a wireless NIC (WNIC) or wireless adapter for communicating with a wireless network, such as a WI-FI.

In some embodiments, the bus 1010 (e.g., a Controller Area Network (CAN) bus) may include hardware, software, or both that couples components of control system 204 to each other and to external components.

The input/output device 1012 may allow an operator of the control system 204 to provide input to, receive output from, and otherwise transfer data to and receive data from control system 204. The input/output device 1012 may include a mouse, a keypad or a keyboard, a joystick, a touch screen, a camera, an optical scanner, network interface, modem, other known I/O devices, or a combination of such I/O interfaces. The input/output device 1012 may include one or more devices for presenting output to an operator, including, but not limited to, a graphics engine, a display (e.g., a display screen), one or more output drivers (e.g., display drivers), one or more audio speakers, and one or more audio drivers. In certain embodiments, the input/output device 1012 is configured to provide graphical data to a display for presentation to an operator. The graphical data may be representative of one or more graphical user interfaces and/or any other graphical content as may serve a particular implementation. The input/output device 1012 may be utilized to display data (e.g., images and/or video data) received from the one or more image sensors and provide one or more recommendations of adjusting operation of the agricultural vehicle 104 and/or the cart 106 and/or video data to assist an operator in navigating the agricultural vehicle 104 and cart 106.

All references cited herein are incorporated herein in their entireties. If there is a conflict between definitions herein and in an incorporated reference, the definition herein shall control.

The embodiments of the disclosure described above and illustrated in the accompanying drawings do not limit the scope of the disclosure, which is encompassed by the scope of the appended claims and their legal equivalents. Any equivalent embodiments are within the scope of this disclosure. Indeed, various modifications of the disclosure, in addition to those shown and described herein, such as alternate useful combinations of the elements described, will become apparent to those skilled in the art from the description. Such modifications and embodiments also fall within the scope of the appended claims and equivalents.

## Claims

1. An autonomous agricultural system comprising:
an agricultural vehicle;
a cart operably coupled to the agricultural vehicle; and
a guidance system for monitoring and controlling operation of the cart and comprising:
an array of sensors mounted on at least one the agricultural vehicle or the cart;
at least one processor; and
at least one non-transitory computer-readable storage medium storing instructions thereon that, when executed by the at least one processor, cause the guidance system to:
capture, via the array of sensors and in real-time, sensor data of a combine harvester;
analyze the sensor data to detect a header of the combine harvester;
determine an initial aligned position relative to the detected header of the combine harvester;
responsive to determining the initial aligned position, cause the autonomous agricultural system to automatically align with the header of the combine harvester at the initial aligned position;
subsequent to aligning with the header of the combine harvester, determine an operating aligned position relative to an unloading auger or a body of the combine harvester; and
responsive to determining the operating aligned position, cause the autonomous agricultural system to automatically align with the unloading auger or the body of the combine harvester at the operating aligned position.

2. The autonomous agricultural system of claim 1, wherein causing the autonomous agricultural system to automatically align with the unloading auger or the body of the combine harvester at the operating aligned position comprises causing the autonomous agricultural system to move from the initial aligned position to the operating aligned position by performing a first zig-zag maneuver.

3. The autonomous agricultural system of claims 1 or 2, wherein determining the operating aligned position relative to the unloading auger or the body of the combine harvester comprises:
responsive to at least partially aligning the autonomous agricultural system with the header of the combine harvester, capturing, via the array of sensors and in real-time, additional sensor data of the combine harvester;
analyzing the additional sensor data to detect at least one of the unloading auger or the body of the combine harvester; and
determining the operating aligned position based at least partially on the detected unloading auger or the detected body of the combine harvester.

4. The autonomous agricultural system of any one of claims 1-3, wherein determining the operating aligned position relative to the unloading auger or the body of the combine harvester comprises: responsive to at least partially aligning the autonomous agricultural system with the header of the combine harvester, based at least partially on a known position and a known orientation of at least one of the unloading auger or the body of the combine harvester relative to the header of the combine harvester, determining the operating aligned position.

5. The autonomous agricultural system of claim 4, wherein the guidance system further comprises instructions that, when executed by the at least one processor, cause the guidance system to: query a database of the guidance system to determine the position and the orientation of the at least one of the unloading auger or the body of the combine harvester relative to the header of the combine harvester.

6. The autonomous agricultural system of claim 4, wherein the guidance system further comprises instructions that, when executed by the at least one processor, cause the guidance system to: receive a communication from the combine harvester indicating the position and the orientation of the at least one of the unloading auger or the body of the combine harvester relative to the header of the combine harvester.

7. The autonomous agricultural system of any one of claims 1-6, wherein the guidance system further comprises instructions that, when executed by the at least one processor, cause the guidance system to: responsive to receiving a harvested commodity from the combine harvester via the unloading auger of the combine harvester, cause the autonomous agricultural system to disengage from the operating aligned position and to travel toward an unloading area of an agricultural field.

8. The autonomous agricultural system of claim 7, wherein causing the autonomous agricultural system to disengage from the operating aligned position and to travel toward the unloading area of the agricultural field comprises:
causing the autonomous agricultural system to perform a second zig-zag maneuver to realign with header of the combine harvester at the initial aligned position; and
subsequent to aligning with the header of the combine harvester, causing the autonomous agricultural system to disengage from the initial aligned position and to travel toward the unloading area of the agricultural vehicle.

9. The autonomous agricultural system of any one of claims 1-8, wherein capturing via the array of sensors and in real-time, sensor data of the combine harvester is triggered responsive to the autonomous agricultural system leaving an unloading area or entering a harvesting area of an agricultural field.

10. The autonomous agricultural system of any one of claims 1-9, wherein analyzing the sensor data to detect the header of the combine harvester comprises utilizing a single shot detector algorithm to identify the header of the combine harvester.

11. The autonomous agricultural system of any one of claims 1-10, wherein determining the operating aligned position comprises determining an alignment distance at which the operating aligned position is located from the body of the combine harvester.

12. The autonomous agricultural system of any one of claims 1-11, wherein the operating aligned position comprises a position and an orientation of the autonomous agricultural system relative to a determined position and a determined orientation of one of the unloading auger or the body of the combine harvester that aligns the cart of the autonomous agricultural system for receiving a commodity into a hopper of the cart from the unloading auger of the combine harvester.

13. The autonomous agricultural system of claim 12, wherein, when the cart is positioned and oriented in the operating aligned position, a downspout of the unloading auger of the combine is oriented above the hopper of the cart and at least substantially horizontally centered between lateral sidewalls of the hopper of the cart.

14. The autonomous agricultural system of any one of claims 1-13, wherein the guidance system further comprises instructions that, when executed by the at least one processor, cause the guidance system to:
analyze the sensor data to determine at least one characteristic of the combine harvester; and
based at least partially on the determined at least one characteristic of the combine harvester, determine at least one of the initial aligned position or the operating aligned position of the autonomous agricultural system relative to the combine harvester.

15. A method of monitoring and controlling operation of a cart of an autonomous agricultural system, the cart being operably coupled to an agricultural vehicle of the autonomous agricultural system, the method comprising:
capture, via an array of sensors and in real-time, sensor data of a combine harvester;
analyzing the sensor data to detect a header of the combine harvester;
determining an initial aligned position relative to the detected header of the combine harvester;
responsive to determining the initial aligned position, causing the autonomous agricultural system to automatically align with the header of the combine harvester at the initial aligned position;
subsequent to aligning with the header of the combine harvester, determining an operating aligned position relative to an unloading auger or a body of the combine harvester; and
responsive to determining the operating aligned position, causing the autonomous agricultural system to automatically align with the unloading auger or the body of the combine harvester at the operating aligned position.
